(19)

Europäisches
Patentamt
European
Patent Office
Office européen
des brevets

(11)     **EP 1 669 871 B1**

(12)     **EUROPEAN PATENT SPECIFICATION**

(45) Date of publication and mention
of the grant of the patent:
**03.09.2008   Bulletin 2008/36**

(51) Int Cl.:
***G06F 11/14*** *(2006.01)*

(21) Application number: **05256074.5**

(22) Date of filing: **29.09.2005**

(54) **Method, apparatus and a corresponding computer readable medium for transmitting setting data**

Verfahren, Vorrichtung und entsprechendes rechnerlesbares Medium zur Übertragung von
Konfigurationsdaten

Procédé, dispositif et support lisible par ordinateur correspondant pour la transmission de données de
configuration

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **10.12.2004   JP 2004359159**

(43) Date of publication of application:
**14.06.2006   Bulletin 2006/24**

(73) Proprietor: **Brother Kogyo Kabushiki Kaisha
Nagoya-shi, Aichi-ken 467-8561 (JP)**

(72) Inventors:
• **Kawai, Sunao,
Brother Kogyo K. K.
Nagoya-shi,
Aichi-ken 467-8562 (JP)**

• **Wakazono,Tomomi,
Brother Kogyo K. K.
Nagoya-shi,
Aichi-ken 467-8562 (JP)**

(74) Representative: **Smith, Samuel Leonard et al
J.A. Kemp & Co.
14 South Square
Gray's Inn
London WC1R 5JJ (GB)**

(56) References cited:
**EP-A- 0 598 504          US-A- 5 361 138
US-A- 6 115 798**

**EP 1 669 871 B1**

**Description**

<u>Background</u>

<u>Technical Field</u>

The technical field relate to a method, device, system and computer readable medium for transmitting setting data to devices on a network.

<u>Related Art</u>

A conventional technique for transmitting setting data is to transmit the setting data from a single device to a plurality of devices at a time via a network. An example of such a device is described in US 6,559,964. According to the technique disclosed in US 6,559,964, setting data for a plurality of facsimile devices is prepared in a server, and the setting data are transmitted from the server to the plurality of facsimile devices at a time.

According to the technique described above, it is unnecessary to conduct an individual setting operation for each of the plurality of facsimile devices. Therefore, setting for the plurality of facsimile devices is effectively easy.

However, the conventional technique described above has a drawback that it is impossible to restore settings of a device to a previous state after the transmission of setting data from a server to the device is executed. That is, if an error due to new setting data newly set to a device by the transmission of setting data occurs in the device, settings of the device cannot be restored to a previous state.

EP 0 598 504 A describes a method and apparatus for logging status information of a printer using an interactive network board coupled between the printer and a Local Area Network, including the use of a Small Computer Systems Interface coupled to the board and having a data channel and a status channel, for transmitting print data to the printer over the data channel, transmitting printer status requests to the printer and receiving printer status data from the printer over the status channel. A memory is coupled to the board and is used for storing the received printer status data. A processor is also coupled to the board for adding beginning and end of print job indicia to the print data prior to transmission to the printer, and for causing the printer status requests to be transmitted to and received from the printer at a first predetermined interval (e.g. every minute). Furthermore, the processor calculates, at a second predetermined interval (e.g. daily) printer status statistics based on the received printer status data and the beginning and end of job indicia. Finally, the processor stores the calculated printer status statistics in the memory. Preferably, the calculated printer status statistics are then stored in a non-volatile memory in the printer and can be accessed at a later date from a remote location. Also, it is preferable if the printer status statistics are provided at a plurality of levels of resolution, the levels being selectable from the remote location.

US 6,115,798 describes a storage device that can reduce the backup operation time by shortening the backup path. The storage device having a memory unit and a memory control unit that controls access to the memory unit includes a backup storage medium; and a backup control unit for implementing an access control under which data in the memory unit is read out via the memory control unit when data in the memory unit is backed up and the readout data is written as backup data into the backup storage medium. The storage device is suitable for use in information processing systems such as parallel computing systems.

US 5,361,138 describes a facsimile apparatus comprising a memory for storing communication mode information, a setting unit for setting a communication mode, and a data transmitting unit for transmitting image data in accordance with the set communication mode. The setting unit checks in response to an input transmission start instruction whether a destination facsimile apparatus is a new receiving side. If the destination facsimile apparatus is determined to be a new receiving side, the setting unit receives the communication mode information from the destination facsimile apparatus and stores the received communication mode information in the memory. If the destination facsimile apparatus is determined not to be a new receiving side, the setting unit reads out the communication mode information from the memory and transmits the readout communication mode information to the destination facsimile apparatus. The setting unit receives changed communication mode information transmitted from the destination facsimile apparatus in response to transmission of the readout communication mode information and stores the changed communication mode information in the memory. The communication mode is set in accordance with one of the changed communication mode information, the readout communication mode information, and the received commonication mode information.

<u>Summary</u>

Aspects are advantageous in that they provide a method, device, system and computer readable medium which are configured to transmit setting data to a plurality of devices at a time and to restore settings of a device to a previous state.

According to the invention, there is provided a method of transmitting setting data from a terminal device to a plurality of target devices as defined in appended claim 1.

With this configuration, it may be possible to transmit new setting data to be applied to a plurality of target devices to the plurality of target devices at a time. In addition, in cases where a trouble arises in a device after the data transmission is executed, a user can restore settings of the device to a previous state by using the stored current setting data of the device.

Optionally, the method may include the step of allowing a user to start restoring settings of a recovery target device of the plurality of target devices to a previous state by transmitting the backup data.

With this configuration, the user is allowed to decide whether to start the restoring of settings of the recovery target device.

Still optionally, the step of the storing the current setting data may store a plurality of pieces of backup data respectively corresponding to the step of obtaining the current setting data.

Since a plurality of pieces of backup data respectively corresponding to the plurality of target devices are created, the restoring of settings can be attained for each of the plurality of target devices.

Still optionally, the method may include the step of restoring settings of a recovery target device of the plurality of target devices to a previous state by transmitting one of the plurality of pieces of backup data selected by a user to the recovery target device.

With this configuration, the setting of the recovery target device is restored by the backup data selected by the user.

Still optionally, the method may include the step of allowing a user to start restoring settings of a recovery target device of the plurality of target devices to a previous state by transmitting a latest one of the plurality of pieces of back up data for the recovery target device to the recovery target device.

With this configuration, the settings of the recovery target device is restored by the latest backup data.

Still optionally, the method may include the step of displaying the current setting data of the recover target device before the step of the allowing the user to start restoring settings of the recovery target device is executed.

With this configuration, the user can decides whether to start the recovering of settings after the user checks the current setting data of the recovery target device.

Still optionally, each of a plurality of pieces of current setting data includes setting values of a plurality of setting items. In this case, the method may include the step of allowing the user to select at least one item from among the plurality of setting items to be targeted for the restoring settings of the recovery target device. The step of the restoring settings of the recovery target device may be executed with regard to the at least one items selected by the user.

With this configuration, the user is allowed to designate setting items to be included in targets of the recovering of settings.

Still optionally, each of a plurality of pieces of current setting data includes setting values of a plurality of setting items. In this case, the method may include the steps of comparing the new setting data with each of the plurality of pieces of current setting data before the step of the storing the plurality of pieces of current setting data is executed so as to detect a setting item of the new setting data to be updated with respect to each of the plurality of pieces of current setting data. The step of the storing the current setting data may be storing the updated setting item in a memory device as backup data.

With this configuration, only setting items to be changed with respect to the current setting data are included in targets for the restoring of settings.

Still optionally, the method may include the steps of specifying a point of time, identifying backup data stored at the specified point of time, and restoring settings of a recovery target device using the identified backup data.

With this configuration, the backup data corresponding to the specified point of time is used for the restoring of the recovery target device.

In a first example, in the specifying step the point of time may be specified based on user designation.

With this configuration, the user can designate the point of time.

In a second example, in the specifying step the point of time may be specified within a range of time designated by a user.

With this configuration, the point of time is determined to be a time within the range of time designated by a user.

In a third example, in the specifying step the point of time may be specified as a time when backup data designated by a use is created.

With this configuration, the specified time is determined to be a time when the backup data designated by a user is created.

Optionally, the method may include the steps of allowing the user to designate at least one setting item, selecting at least one backup data containing the at least one setting item designated by the user from among the plurality of pieces of backup data, displaying the plurality of pieces of backup data, allowing the user to select at least one backup data; and restoring settings of at least one device corresponding to the selected backup data.

Since only setting values of setting items designated by the user are transmitted to a device, the data transmission speed is enhanced in comparison with the case where all of the setting items are transmitted to a device. It is prevented that setting items which do not need to be subjected to the recovering are restored to a previous state.

Still optionally, the method may include the steps of displaying the plurality of pieces of backup data, allowing the user to select at least one backup data, and restoring settings of at least one device corresponding to the selected backup data.

With this configuration, only backup data selected by the user is used for the restoring.

Still optionally, the step of the preparing the new setting data comprises the steps of allowing the user to select a representative device from among a plurality of devices, and obtaining representative setting data currently set to the representative device. One of the representative setting data and modified setting data made by modifying the representative setting data may be used as the new setting data.

The method may include preparing a plurality of pieces of new setting data to be set to the plurality of target devices, respectively, obtaining a plurality of pieces of current setting data currently set to the plurality of target devices, respectively, storing the plurality of pieces of current setting data obtained from the plurality of target device in a memory device, and transmitting the plurality of pieces of new setting data to the plurality of target devices, respectively, after the storing of the current setting data is finished.

With this configuration, it becomes possible to transmit a plurality of pieces of new setting data to be applied to a plurality of target devices to the plurality of target devices at a time. In addition, in cases where a trouble arises in a device after the data transmission is executed, a user can restore settings of the device to a previous state by using the stored current setting data of the device.

According to the invention, there is also provided a terminal device for transmitting setting data to a plurality of target devices as defined in appended claim 18.

With this configuration, it becomes possible to transmit new setting data to be applied to a plurality of target devices to the plurality of target devices at a time. In addition, in cases where a trouble arises in a device after the data transmission is executed, a user can restore settings of the device to a previous state by using the stored current setting data of the device.

Optionally, the terminal device may include a restoring system that restores one or more settings of a recovery target device of the plurality of target devices to a previous state by transmitting one current setting data of the plurality of pieces of current setting data stored by the step of the storing to the recovery target device, wherein the one current setting data is data obtained from the recovery target device in the obtaining step.

The device and method according to the present invention can be realized when appropriate programs are provided and executed by a computer. Such programs may be stored in recording medium such as a flexible disk, CD-ROM, memory cards and the like and distributed. Alternatively or optionally, such programs can be distributed through networks such as the Internet.

Brief Description of the Accompanying Drawings

Fig. 1 is a general configuration of a network system in which a setting data transmission system is implemented.

Fig. 2 illustrates a device setting management tool initial screen.

Fig. 3 is an explanatory diagram for explaining a user operation conducted on the device setting management tool initial screen.

Fig. 4 illustrates a printer setting function initial screen.

Fig. 5 is an explanatory diagram for explaining a user operation conducted on the printer setting function initial screen.

Fig. 6 illustrates a NIC setting dialog box.

Fig. 7 is a general flowchart applied to both of first and second data setting transmission process.

Fig. 8 is a flowchart of a "Send Settings to Printer(s)" dialog process.

Fig. 9 illustrates a "Send Settings to Printer(s)" dialog box.

Fig. 10 illustrates a situation where grayed out representation in the "Send Settings to Printer(s)" dialog box is released.

Fig. 11 is a flowchart illustrating a process for adding a designated device in a device list.

Fig. 12 is a flowchart illustrating a process for searching for devices and for updating the device list.

Fig. 13 is flowchart illustrating a transmission confirmation dialog process.

Fig. 14 illustrates a transmission confirmation dialog box.

Fig. 15 is a flowchart illustrating a device setting acquisition process.

Fig. 16 illustrates a situation where grayed out representation of the transmission confirmation dialog box is released.

Fig. 17 is a flowchart illustrating an advanced setting change window process.

Fig. 18 illustrates an advanced setting change window of the first data setting transmission process.

Fig. 19 illustrates an advanced setting change window of the second data setting transmission process.

Fig. 20 is a flowchart illustrating a setting change process.

Fig. 21 illustrates a setting change dialog box.

Fig. 22 is a flowchart illustrating a setting data package transmission process.

Figs. 23A and 23B illustrate a transmission progress dialog box.

Fig. 24 illustrates a transmission result dialog box.

Fig. 25 is a flowchart illustrating a NIC setting dialog displaying process.

Fig. 26 is a flowchart illustrating a data updating process according to a first example.

Fig. 27 illustrates a menu box for starting a recovering process displayed over a device setting management tool initial screen.

Fig. 28 is a general flow of the recovering process according to the first example.

Fig. 29 is a flowchart illustrating a data updating process according to a second example.

Fig. 30 is a flowchart illustrating a recovering process according to the second example.

Fig. 31 is a flowchart illustrating a recovering process according to a third example.

Fig. 32 illustrates a "Recover Setting" dialog box displayed on a screen in the recovering process according to the third example.

Fig. 33 is a flowchart illustrating a recovering process according to a fourth example.

Fig. 34 illustrates a "Recover Setting" dialog box displayed on the screen in the recovering process according to the fourth example.

Fig. 35 is a flowchart illustrating a data updating process according to a fifth example.

Fig. 36 is a flowchart illustrating a recovering process according to a sixth example.

Fig. 37 illustrates an "Other Devices..." dialog box in which information regarding setting history files stored in a history file list is displayed.

Fig. 38 is a flowchart illustrating a recovering process according to a seventh example.

Fig. 39 illustrates a "Search Setting History" dialog box displayed on the screen to accept the input of a target time period.

Fig. 40 illustrates a "Search Result" dialog box in which a list of setting history files included in the history file list is represented.

Fig. 41 is a flowchart illustrating a recovering process according to an eighth example.

Fig. 42 is a variation of the device setting acquisition process shown in Fig. 15.

Fig. 43 is a variation of the setting data package transmission process of Fig. 22.

Detailed Description of the Embodiments

Hereafter, embodiments according to the invention will be described with reference to the accompanying drawings.

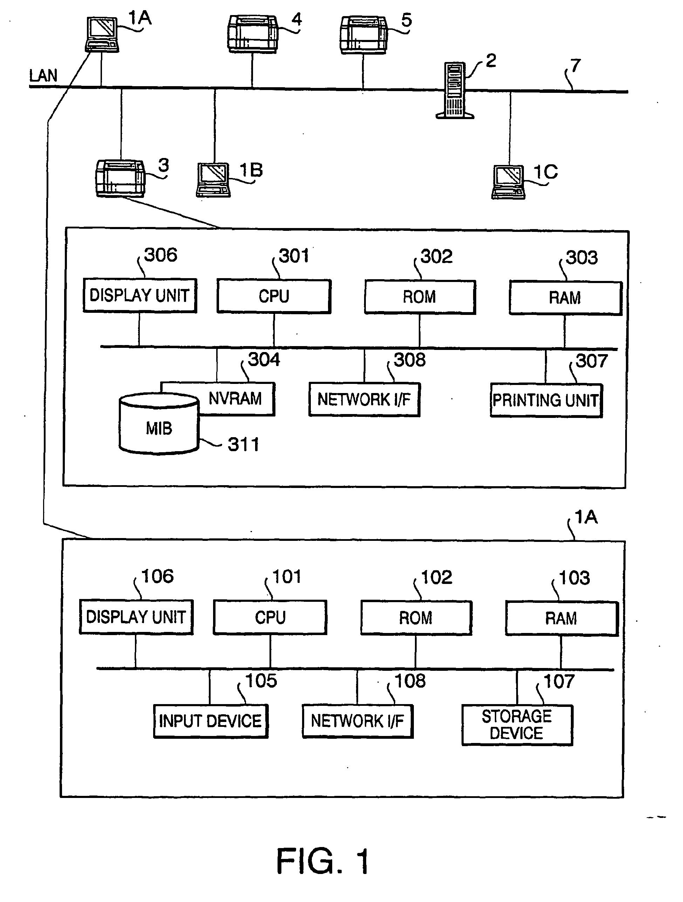

Fig. 1 is a general configuration of a network system in which a setting data transmission system according to the embodiment of the invention is implemented. The network system shown in Fig. 1 includes a plurality of PCs (personal computers) 1A, 1B and 1C, a router 2, a plurality of printers 3, 4 and 5, and a LAN (local area network) 7 for connecting these nodes.

Since the PCs 1A, 1B and 1C have the same configuration, in Fig. 1 a block diagram of the PC 1A is illustrated as an example. As shown in Fig. 1A, the PC1A includes a CPU (central processing unit) 101, a ROM (read only memory) 102, a RAM (random access memory) 103, an input device 105 such as a keyboard and a pointing device, a display unit 106, a storage device 107 such as a hard disc drive, and a network I/F (interface) 108 for connecting the PC 1A to the LAN 7. A multi-task operating system such as Windows ®, Linux ®, or MacOS ® may be installed in the PCs 1A, 1B and 1C. The following explanation is made on the assumption that Windows ® is installed in the PCs 1A, 1B and 1C. The CPU 101 of the PC 1A executes tasks of a plurality of programs in parallel on a time-division basis in accordance with a multi-task function of the OS. It is appreciated that any operating system may be used with aspects of the present invention. A setting data transmission process (which is explained in detail later) according to the embodiment is executed one of such parallel tasks. Since the PCs 1B and 1C have the same configuration as that of the PC 1A, the explanations thereof will not be repeated.

In this embodiment, the setting data transmission process is executed such that a plurality of pieces of setting data are transmitted to device at a time.

The router 2 has the function of relaying data from one network to another network. Since the printers 3, 4 and 5 have the same configuration, in Fig. 1 a block diagram of the printer 3 is illustrated as an example. As shown in Fig. 1, the printer 3 includes s a CPU (central processing unit) 301, a ROM (read only memory) 302, a RAM (random access memory) 303, a NVRAM (non volatile RAM) 304, a display unit 306 on which various types of messages are displayed, a printing unit 307 having the function of printing images on a recording medium, and a network I/F (interface) 308 for connecting the printer 3 to the LAN 7. As described in detail later, in the setting data transmission process, the PC 1A (1B or 1C) operates, for example, to obtain setting data from one of the printers 3, 4 and 5 and to transmit setting data to the printers 3, 4 and 5 at a time.

In this embodiment, data transmission between the PCs and the printers is performed based on a simple network management protocol (SNMP). Each of the printers 3 to 5 is configured to store a management information base (for example, a MIB 311 stored in the NVRAM 304 of the printer 3). For obtaining setting data from one of the printers 3 to 5, the PC 1A sends a data acquisition request based on SNMP to a target printer (one of the printers 3 to 5). Then, the target printer provides setting data in an MIB (e.g. the MIB 311 of the printer 3), which is managed by and stored in the target printer, for the PC 1A as a response to the data acquisition request.

For making the setting to a target printer (one of the printers 3 to 5), the PC 1A sends a data setting request based on SNMP containing setting data to the target printer. Then, the target printer stores the received setting data in its own MIB (e.g. the MIB 311 of the printer 3) as a response to the data setting request sent by the PC 1A.

Hereafter, the setting data transmission process performed between the PCs and the printers will be explained. The setting data transmission process includes two types of transmission processes: a first type process is a process for setting a principal function of a printing device (e.g. a printer, a multi-function product having a printing function); and a second type process is a process for setting a network function of a NIC (a network interface card, for example, the network I/F 308 of the printer 3) provided in the printing device. Hereafter, the first type process is referred to as a first data setting transmission process, and the second type process is referred to as a second data setting transmission process.

Since general flows of the fist and second data setting transmission processes are substantially equal to each other, the explanation of the data setting transmission process is made without making a distinction between the first and the second data setting transmission processes. Therefore, in the following, differences between the first and second data setting transmission processes will be explained, only if the necessity arises.

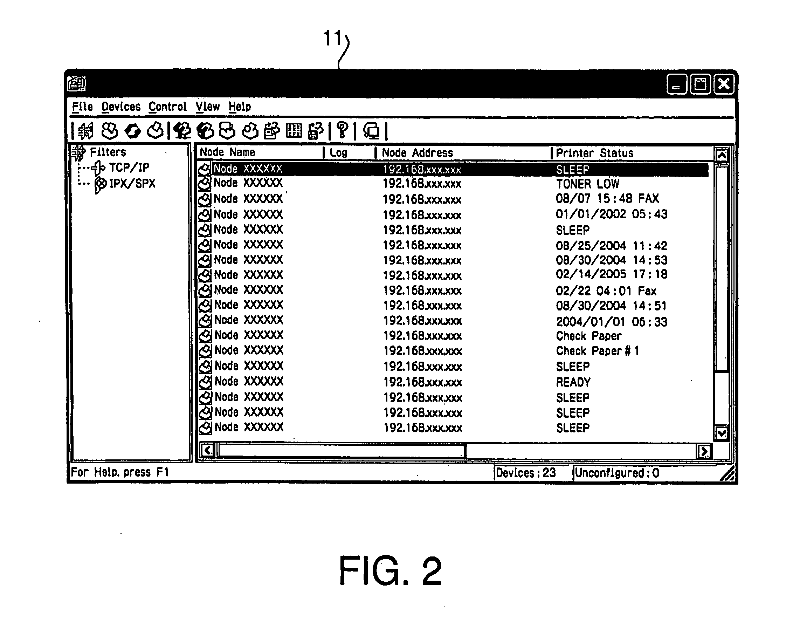

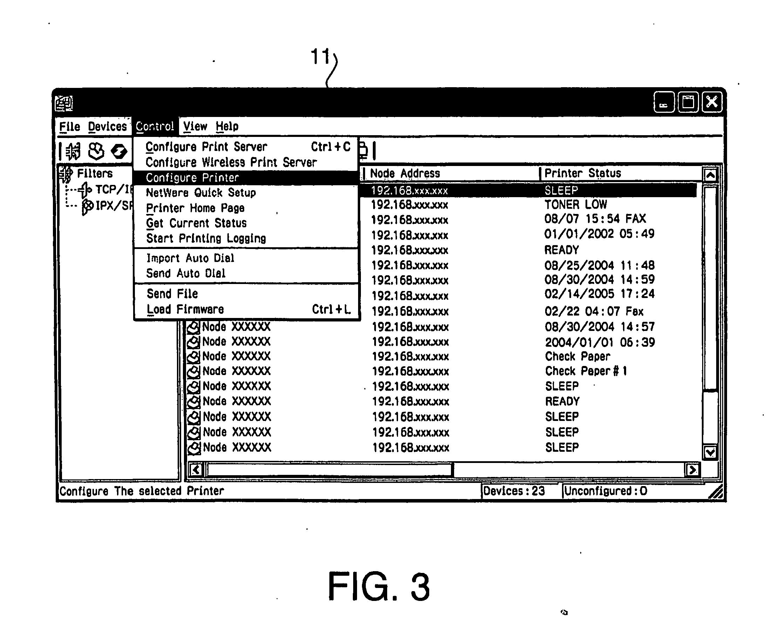

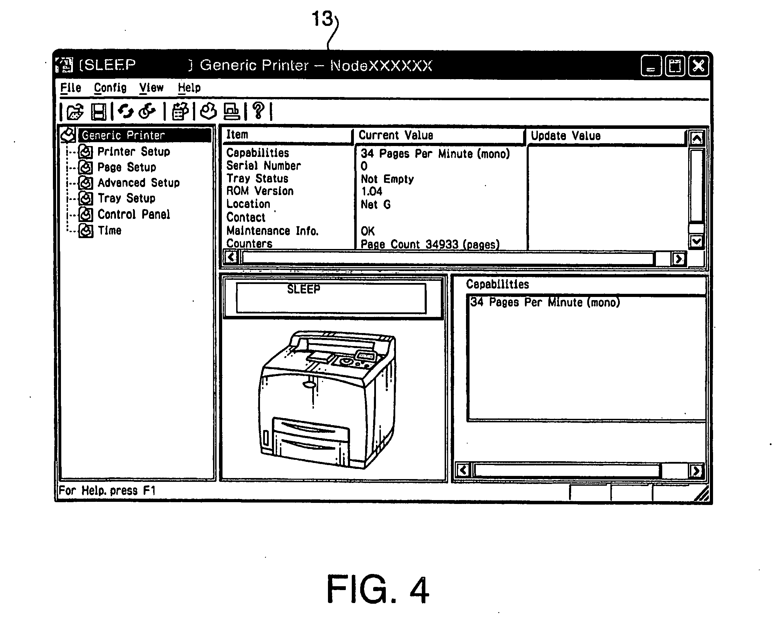

First, user interfaces (UI) of the first and second data setting transmission processes are explained. To start the first data setting transmission process, a user operates the PC 1A to initiate a device setting management tool. If the device setting management tool is initiated, a device setting management tool initial screen 11 is displayed, for example as a window, on the display unit 106 of the PC 1A as shown in Fig. 2. In the initial screen 11 of Fig. 2, a list of printing devices (e.g. printers or multi-function products) detected on the network is displayed. If a user selects one of the printing devices listed in the device setting management tool initial screen 11 as a representative device, clicks a "Control" menu (i.e. pointing the "Control" menu first by using a pointing device and then pushing a button on the pointing device) on a menu bar on the device setting management tool initial screen 11, and then clicks a "Configure printer" menu in a pull-down menu displayed under the "Control" menu (see Fig. 3), a printer setting function initial screen 13 is displayed as shown in Fig. 4.

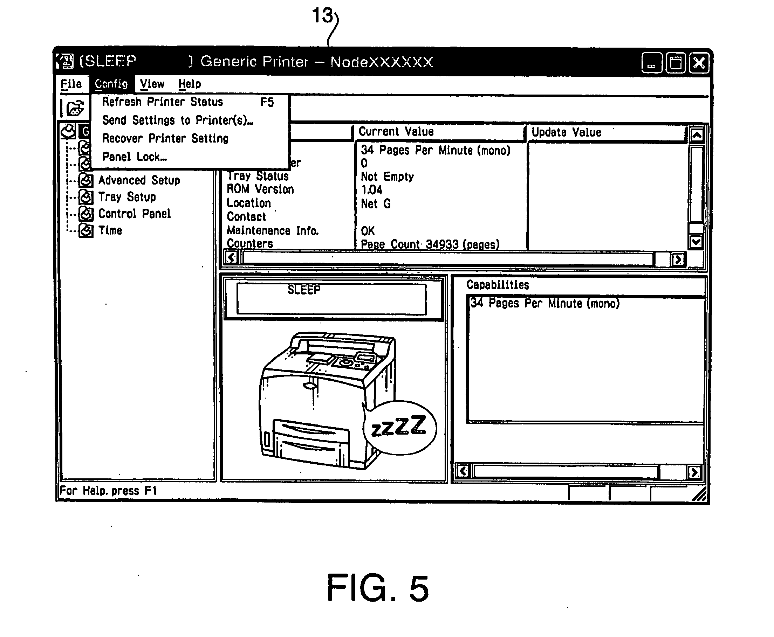

The printer setting function initial screen 13 is used to perform the configuration of printing devices (e.g. printers or multi function products). As shown in Fig. 4, in the printer setting function initial screen 13, various types of current settings of the printing device selected in the device setting management tool initial screen 11 (i.e. the representative device) are displayed. By clicking a "Config" menu in a menu bar on the printer setting function initial screen 13, and then clicking a "Send Settings to Printer(s)" menu in a pull-down menu displayed under the "Config" menu (see Fig. 5), the PC 1A initiates the first data setting transmission process.

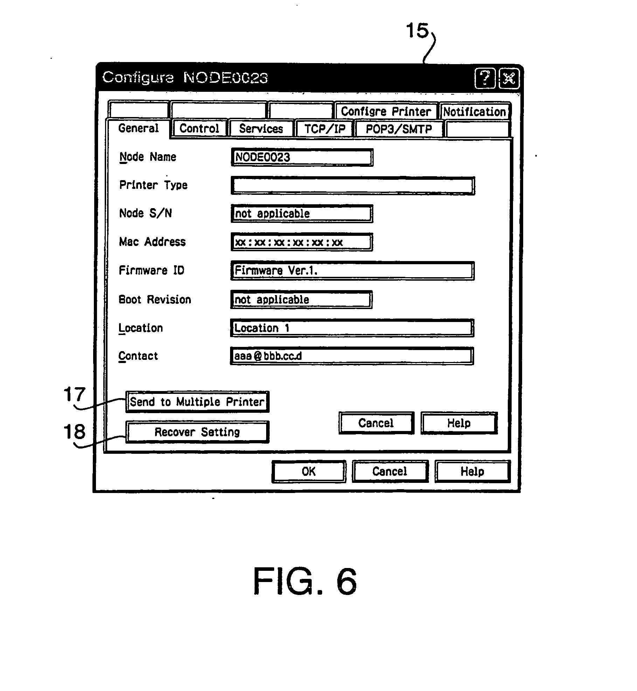

For initiating the second data setting transmission process, a user double clicks one of printing devices listed in the device setting management tool initial screen 11 after opening the device setting management tool initial screen 11, or a user clicks a "Control" menu in the menu bar on the device setting management tool initial screen 11 and then clicks "Configure Print Server" in the pull-down menu. Then, a NIC setting dialog box 15 shown in Fig. 6 is displayed. By clicking a "Send to Multiple Printer" button 17 in a "General" tab on the NIC setting dialog box 15, the PC 1A initiates the second data setting transmission process.

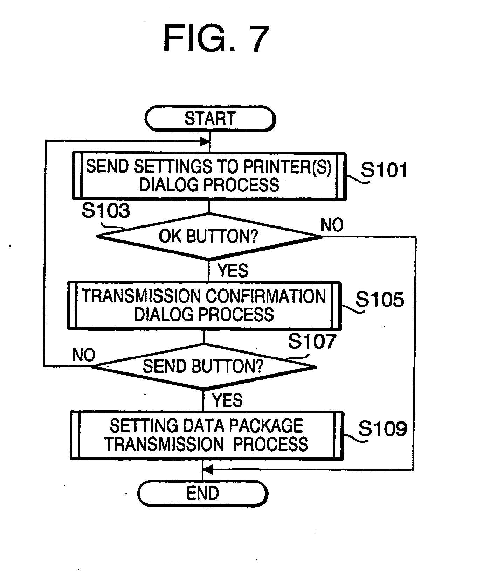

Fig. 7 is a general flowchart applied to both of the first and second data setting transmission process executed under control of the CPU 101 of the PC 1A (1B or 1C). After the initiation of the first or second data setting transmission process, a "Send Settings to Printer(s)" dialog process (step S101) is executed.

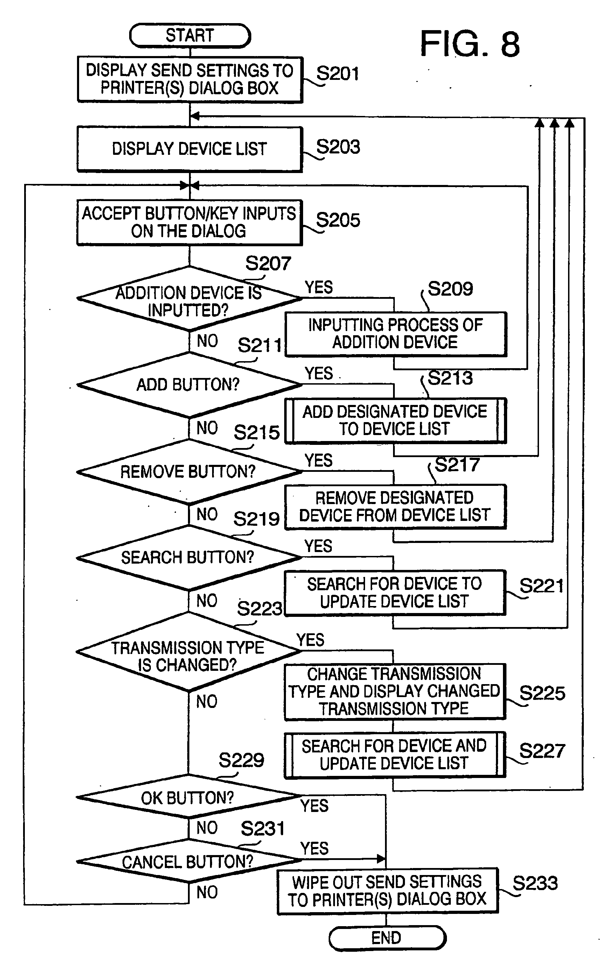

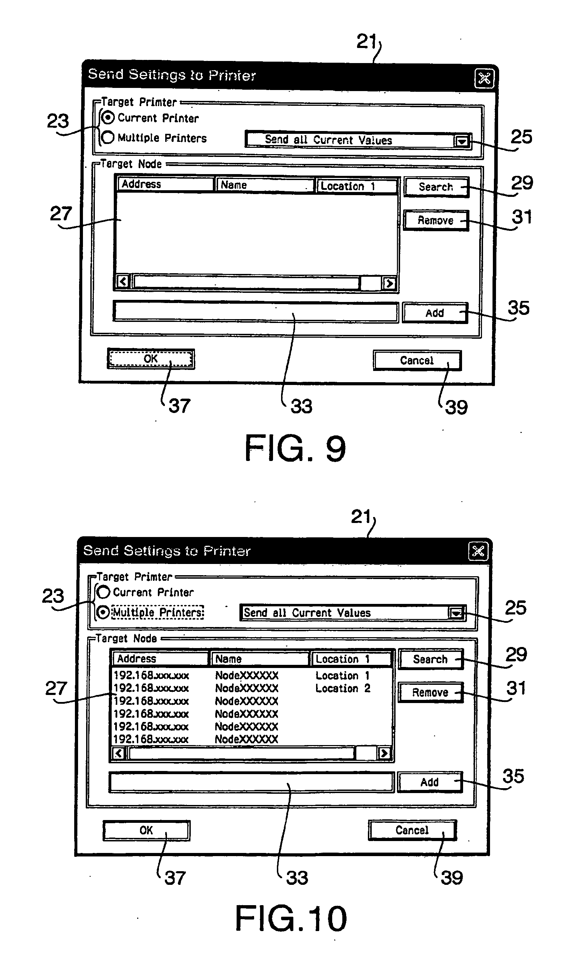

Fig. 8 is a flowchart of the "Send Settings to Printer(s)" dialog process. After the "Send Settings to Printer(s)" dialog process is initiated, the PC 1A displays a "Send Settings to Printet(s)" dialog box 21 on the display unit 106 as shown in Fig. 9 (step S201). As shown in Fig. 9, the "Send Settings to Printer(s)" dialog box 21 includes a transmission target selection radio button 23, a transmission type changing instruction field 25, a device list indication field 27, a "Search" button 29, a "Remove" button 31, an addition device input text box 33, an "Add" button 35, an "OK" button 37, and a "Cancel" button 39.

At an initial condition of the "Send Settings to Printer(s)" dialog box 21, the transmission target selection radio button 23 is set to "Current Printer", and the transmission type changing instruction field 25, the device list indication field 27, the "Search" button 29, the "Remove" button 31, the addition device input text box 33, and the "Add" button 35 are grayed out (a grayed out item represents that the item can not accept operation).

If the user sets the transmission target selection radio button 23 to "Multiple Printer", the grayed out representation of the transmission type changing instruction field 25, the device list indication field 27, the "Search" button 29, the addition device input text box 33, and the "Add" button 35 is released. If the grayed out representation is released, a selection among instructions of "1: Send all Current Values", "2: Send all Update Values" and "3: Send Current and Update Values" is enabled in the transmission type changing instruction field 25. The grayed out representation of the "Remove" button 31 is also released if one or more devices are displayed in the device list indication field 27.

After the "Send Settings to Printer(s)" dialog box 21 described above is displayed, the PC 1A displays a device list (i.e. contents to be displayed in the device list indication field 27) of the "Send Settings to Printer(s)" in step S203. As described above, the device list indication field 27 is grayed out and no item is displayed in the device list indication field 27 in the initial condition (see Fig. 9). If the user sets the transmission target selection radio button 23 to the "Multiple Printers" in a later stage, the grayed out representation is released and a search for detecting devices on the network is initiated automatically. Devices detected by the search are registered in the device list and are displayed on the device list indication field 27 as shown in Fig. 10.

After the step S203 is finished, the PC1 accepts inputs of buttons and keys on the "Send Settings to Printer(s)" dialog box 21 (step S205). In step S205, the user can conduct the switching operation of the transmission target selection radio button 23, an address inputting operation in the addition device input text box 33, and a pressing operation of the "Search" button 29, the "Remove" button 31, the "Add" button 35, the "OK" button 37, or the "Cancel" button 39.

If an address is inputted in the addition device input text box 33 (S207:YES), an inputting process for obtaining character strings inputted in the addition device input text box 33 is executed in step S209. Then, control returns to step S205.

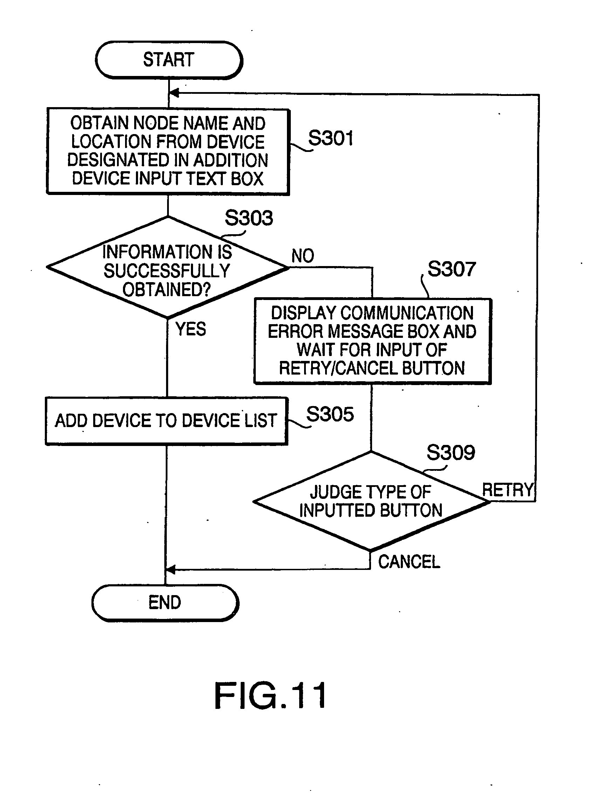

If an address is not inputted in the addition device input text box 33 (S207:NO), control proceeds to step S211 where it is judged whether the "Add" button 35 is pressed. If the "Add" button is pressed (S211:YES), a process for adding a device designated in the addition device input text box 33 to the device list is executed (S213). Fig. 11 is a flowchart illustrating the process executed in step S213.

As shown in Fig. 11, the PC 1A operates to obtain information including a node name and a location from a device having the address designated in the addition device input text box 33 (step S301). If the acquisition of the device information is successfully completed (S303:YES), the device is added to the device list (step S305). As a result, information regarding the device having the address designated in the addition device input text box 33 is additionally displayed on the device list indication field 27.

If the acquisition of the device information is not successfully completed (S303:NO), the PC 1A displays a message box of a communication error and waits for an input of a "Retry/Cancel" buttons (S307). If the user presses one of the "Retry/Cancel" buttons, control proceeds from step S307 to step S309. If the button pressed by the user is "Retry" button (S309:Retry), control returns to S301. If the button pressed by the user is "Cancel" button (S309:Cancel) or the step S305 is finished, the process of Fig. 11 terminates. The completion of the process shown in Fig. 11 corresponds to completion of step S213 of Fig. 8.

Returning now to Fig. 8, after step S213 is finished, control returns to step S203. If the "Add" button is not pressed (S211:NO), control proceeds to step S215 where it is judged whether the "Remove" button 31 is pressed. If the "Remove" button 31 is pressed (S215:YES), a designated device is removed from the device list (S217). Then, control returns to step S203. To designate a device to be removed from the device list, a user selects a device to be removed form devices listed in the device list indication field 27 and then presses the "Remove" button 31.

If the "Remove" button 31 is not pressed (S215:NO), control proceeds to step S219 where it is judged whether the "Search" button 29 is pressed. If the "Search" button 29 is pressed (S219:YES), the PC 1A operates to search for devices on the network to update the device list (step S221). More specifically, in step S221, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the data setting transmission process, updates the device list with regard to the responded devices, and then adds the responded devices to the device list indication field 27. After the process of step S221 is finished, control returns to step S203.

If undesired devices which are not to be targeted for the data setting transmission process responded to the packet, the user may delete such undesirable devices using "Remove" button 31.

If the "Search" button 29 is not pressed (S219:NO), control proceeds to step S223 where it is judged whether an operation for changing the instruction of transmission type by using the transmission target selection radio button 23 and the transmission type changing instruction field 25 is conducted. If a user operation for changing the instruction of transmission type is conducted (S223:YES), representation of the transmission type changing instruction field 25 is changed in accordance with the changed transmission type, and then the "Send Settings to Printer(s)" dialog box 21 is refreshed (S225).

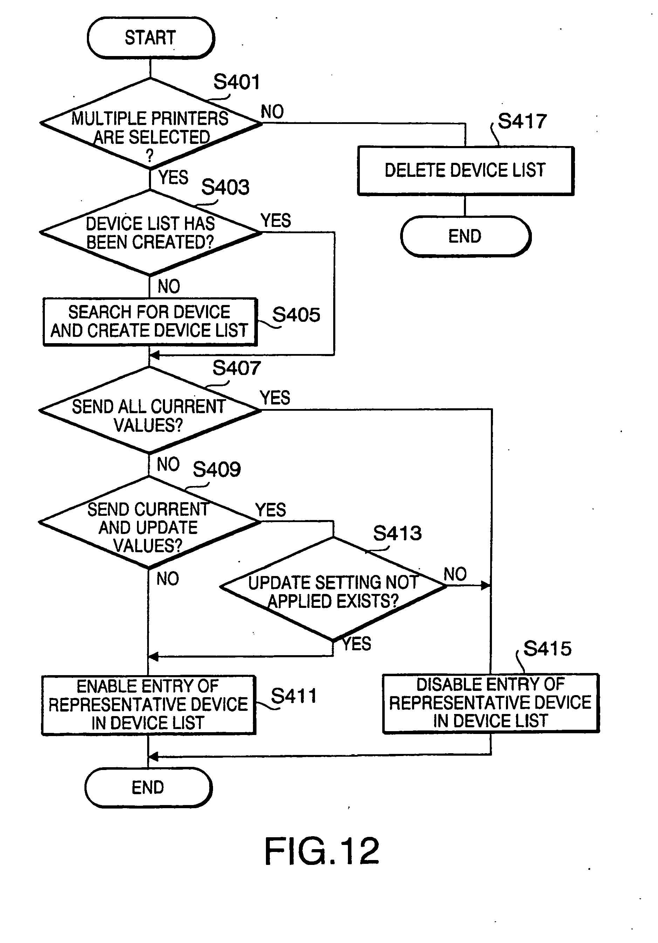

Then, a process of step S227, which is illustrated in detail in Fig. 12, is executed. In step S227, an operation for searching for devices and an operation for updating the device list are executed on an as needed basis.

As shown in Fig. 12, firstly, the PC 1A judges whether "Multiple Printer" is selected in the transmission target selection radio button 23 (S401). If the "Multiple Printer" is selected (S401:YES), control proceeds to step S403. In step S403, it is judged whether the device list has been created or not. If the device list has not been created (S403:NO), the device list is created in step S405 and control proceeds to step S407. If the device list has been created (S403:YES), control proceeds to step 407.

In step S407, it is judged whether "Send all Current Value" is designated in the transmission type changing instruction field 25. In step S409, it is judged whether "Send Current and Update Values" is selected in the transmission type changing instruction field 25. If the "Send all Current Value" is not designated (S407:NO) and "Send Current and Update Values" is not designated (S409:NO), the instruction designated in the transmission type changing instruction field 25 is "Send all Update Values". In this case, in step S411, the device list is modified such that an entry of the representative device, which is selected as the representative device on the UI (i.e., the device setting management tool initial screen 11) displayed before the initiation of the data setting transmission process, is set as valid data.

If the "Send all Current Value" is not designated (S407:NO) and "Send Current and Update Values" is designated (S409:YES), control proceeds to step S413. In step S413, it is checked whether update settings not applied to the representative device exist. If the update settings not applied to the representative device exist (S413:YES), the device list is modified such that the entry of the representative device is set as valid data (S411). If the update settings have been applied to the representative device (S413:NO), control proceeds to step S415 where the entry of the representative device in the device list is designated as invalid data.

If the "Send all Current Value" is designated in the transmission type changing instruction field 25 (S407:YES), control proceeds to step S415 where the entry of the representative device in the device list is designated as invalid data.

If it is judged in step S401 that the "Multiple Printers" is not selected on the transmission target selection radio button 23 (S401:YES), the selection result on the transmission target selection radio button 23 is "Current Printer". In this case, the device list is deleted (S417). After completion of step S411, S415, or S417, the process of Fig. 12 terminates. The termination of the process of Fig. 12 corresponds to the termination of step S227 of Fig. 8.

Referring now to Fig. 8, after completion of step S227, control returns to S203. If the user operation for changing the instruction of transmission type is not conducted (S223:NO), control proceeds to step S229. In step S229, it is judged whether the "OK" button 37 is pressed. In step S231, it is judged whether the "Cancel" button 39 is pressed. If the "OK" button 37 or the "Cancel" button is pressed (S229:YES or S231:YES), control proceeds to step S233. In step S233, the "Send Settings to Printer(s)" dialog box 21 is wiped out. The "Cancel" button 39 is used to instruct the PC 1A to stop a current process, and the "OK" button 37 is used to instruct the PC 1A to continue a current process. The selection result between the "OK" button 37 and the "Cancel" button 39 is used in step S103 of Fig. 7.

If it is judged in step S231 that the "Cancel" button 39 is not pressed (S231:NO), control returns to step S205 since no effective operation is conducted.

After completion of step S233, the process for "Send Settings to Printer(s)" terminates and also the step S101 of Fig. 7 terminates.

Referring now to Fig. 7, after completion of step S101, the PC 1A judges whether the button pressed in step S205 is the "OK" button 37 (S103). If the "OK" button 37 is not pressed (S 103:NO), the data setting transmission process terminates since in this case the pressed button is the "Cancel" button 39.

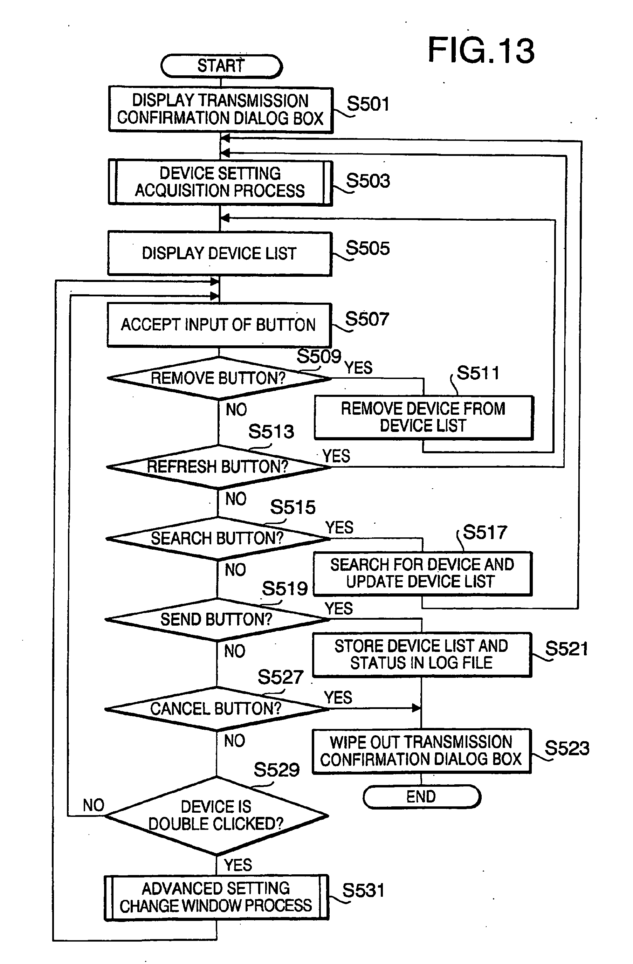

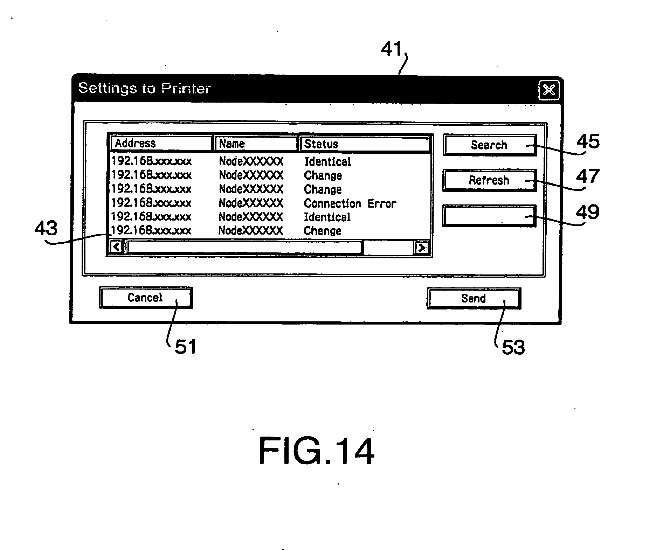

If the "OK" button 37 is pressed (S103:YES), a transmission confirmation dialog process is executed in step S105. Fig. 13 is flowchart illustrating the transmission confirmation dialog process. Firstly, in step S501 the PC 1A displays a transmission confirmation dialog box 41 on the display unit 106 as shown in Fig. 14. In the transmission confirmation dialog box 41, information on whether setting data are to be changed or not, and information on whether devices are in an operable state are displayed for each of the devices. As shown in Fig. 14, the transmission confirmation dialog box 41 includes a device list display field 43, a "Search" button 45, a "Refresh" button 47, a "Remove" button 49, a "Cancel" button 51, and a "Send" button 53. As described in detail later, information regarding the device list is displayed on the device list display field 43 in step S505.

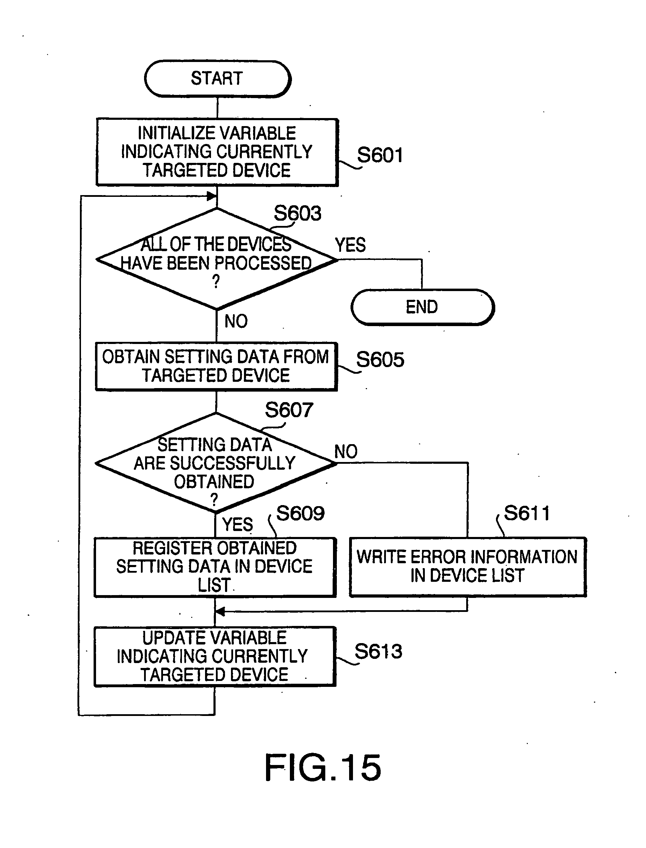

After the transmission confirmation dialog box 41 is displayed in step S501, the PC 1A executes a device setting acquisition process in step S503. Fig. 15 is a flowchart illustrating the device setting acquisition process.

As shown in Fig. 15, firstly, the PC 1A initializes a variable i (the number) indicating a device currently targeted for acquisition of device setting (S601). The variable i is used to process devices one by one from the top of the device list. It is noted that a device list used in the device setting acquisition process is created in the "Send Settings to Printer (s)" dialog process, and the device list may be modified in the device setting acquisition process.

To point at a device listed at the top of the device list, the variable i is assigned 1 (i.e. i=1) in step S601. Next, the PC 1A judges whether all of the devices in the device list have been processed or not (S603). Specifically, in step S603 the PC 1A judges whether a condition i≤n (where n represents the total number of devices in the device list) holds or not. If all of the devices in the device list have not been processed (S603:NO), control proceeds to step S605. In step S605, setting data are obtained from a current device (a device designated by the variable i).

More specifically, the acquisition of setting data from the current device is executed as follows. The PC 1A sends a data acquisition request to the current device based on SNMP. Then, the current device (which has been received the data acquisition request) sends setting data stored in the MIB (e.g. the MIB 311 of the printer 3) managed by the current device to the PC 1A as a response to the data acquisition request. Setting items to be obtained from the current device vary depending on the transmission type designated in the transmission type changing instruction field 25 of the "Send Settings to Printer(s)" dialog box 21. That is, if the transmission type is "Send all Current Values" or "Send Current and Update Values", setting data of all of the setting items is obtained form the current device. If the transmission type is "Send all Update Values", only setting data of setting items to be updated is obtained from the current device. In this embodiment, the term "setting items" means items which are predetermined, for each of device models, as target items to be processed in the data setting transmission process and do not cover all of setting items supported by a current device.

Next, in step S607, the PC 1A judges whether the setting data are successfully obtained form the current device. If the setting data are successfully obtained (S607:YES), the obtained setting data are registered in the device list (in a corresponding entry of the device list) (S609). Status information "Identical" is also registered in the corresponding entry of the device list if all of the obtained setting data are identical to setting data to be sent to the current device. Status information "Change" is registered in the corresponding entry of the device list if all of the obtained setting data are not identical to setting data to be sent to the current device.

If the setting data are not successfully obtained (S607:NO), control proceeds to step S611. In step S611, error information is registered in the corresponding entry of the device list. Specifically, in this case, status information "Connection error" may be registered in the corresponding entry of the device list. If the process in step S609 or S611 is finished, the variable i indicating the current device is updated (S613). Then, control returns to step S603. For example, the variable i may be incremented by one in step S613.

By repeating a sequence of steps S603 to S613, entries in the device list are processed one by one until all of the devices in the device list are completely processed. If all of the devices in the device are processed (S603:YES), the device setting acquisition process of Fig. 15 terminates. Although, in the process shown in Fig. 15, the variable i is used to indicate a device currently targeted for acquisition of setting data, another scheme (for example, a scheme in which a pointer indicating an address of an entry of a device currently targeted for acquisition of setting data are used) may be used to process devices in the device list sequentially.

As shown in Fig. 13, after the process of step S503 is finished, the PC 1A displays contents of the device list on transmission confirmation dialog box 41. By execution of step S503, information of each device is displayed on the device list display field 43, and one of statuses ("Identical", "Change", "Connection error") is also displayed on the device list display field 43 for each device.

Next, the PC 1A accepts inputs from buttons on the transmission confirmation dialog box 41 (S507). In this stage, the PC 1A allows the user to operate one of the "Search" button 45, "Refresh" button 47, "Remove" button 49, "Cancel" button 51, and "Send" button 53.

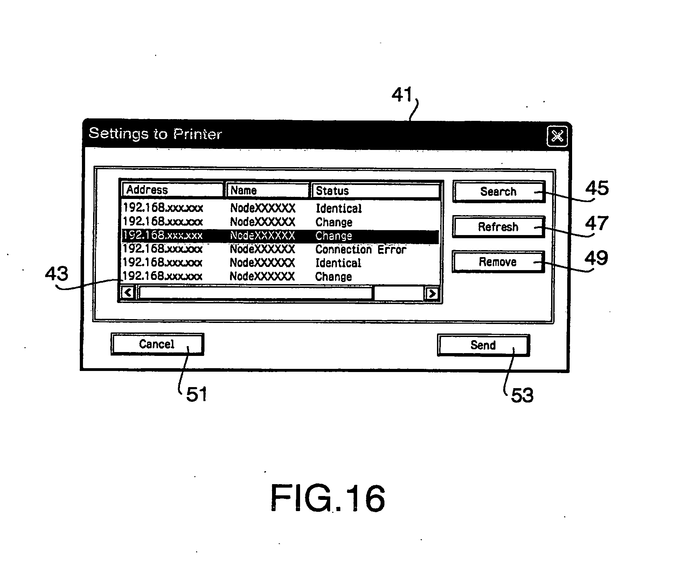

If the "Remove" button 49 is pressed (S509:YES), a designated device is removed from the device list (S511). The designation of a device to be removed from the device list is performed by selecting a device on the device list display field 43 and then pressing the "Remove" button 49. The "Remove" button 49 is grayed out in an initial condition as shown in Fig. 14, and the grayed out representation of the "Remove" button 49 is released when one of the devices is designated in the device list display field 43 (see Fig.16).

If the "Remove" button 49 is not pressed (S509:NO), control proceeds to step S513 where it is judged whether the "Refresh" button 47 is pressed. If the "Refresh" button 47 is pressed (S515:YES), control returns to step S503 to execute again the device setting acquisition process. Consequently, the information in the device list display field 43 is updated.

Next, in step S515, the PC 1A judges whether the "Search" button 45 is pressed or not. If the "Search" button 45 is pressed (S515:YES), control proceeds to step S517. In step S517, the PC 1A searches for devices on the network to update the device list. More specifically, in step S517, the PC 1A broadcasts a packet requesting responses from devices on the network according to SNMP, and waits for responses in a few seconds. If a device capable of responding to the packet exists on the network, the device sends a response back to the PC 1A. A device incapable of responding to the packet discards the received packet. The PC 1A recognizes devices which send responses back to the PC 1A as devices to be targeted for the data setting transmission process, updates the device list with regard to responded devices, and then refreshes information in the device list display field 43. After the process of step S517 is finished, control returns to step S503.

If undesired devices which are not to be targeted for the data setting transmission process according to the embodiment responded to the packet, the user may delete such undesirable devices using "Remove" button 49.

If the "Search" button 45 is not pressed (S515:NO), control proceeds to step S519 where it is judged whether the "Send" button 53 is pressed. If the "Send" button 53 is pressed (S519:YES), contents of the device list containing the statuses ("Identical", "Change", "Connection error") is recorded in a log file (S521), and the transmission confirmation dialog box 41 is wiped out (S523). Then, the transmission confirmation dialog process terminates.

If it is judged in step S519 that the "Send" button 53 is not pressed (S519:NO), control proceeds to step S527 where the PC 1A judges whether the "Cancel" button 51 is pressed. If the "Cancel" button 51 is pressed (S527:YES), the transmission confirmation dialog box 41 is wiped out (S523). Then, the transmission confirmation dialog process terminates.

As described above, the step S523 is executed in both of the cases where the "Send" button 53 is pressed and where the "Cancel" button 51 is pressed, but the step S521 is executed only in the case where the "Send" button 53 is pressed. Pressing the "Send" button 53 instructs the PC 1A to continue the transmission confirmation dialog process, and pressing the "Cancel" button 51 instructs the PC 1A to stop the transmission confirmation dialog process. Information on whether the "Send" button 53 is pressed or the "Cancel" button 51 is pressed is used in step S107 of Fig. 7 as described later.

If it is judged in step S527 that the "Cancel" button 51 is not pressed (S527:NO), control proceeds to step S529. If it is judged in step S529 that no device in the device list display field 43 is double clicked (S529:NO), control returns to step S507 since no effective operation is made by the user. If a device in the device list display field 43 is double clicked (S529:YES), the PC 1A executes an advanced setting change window process.

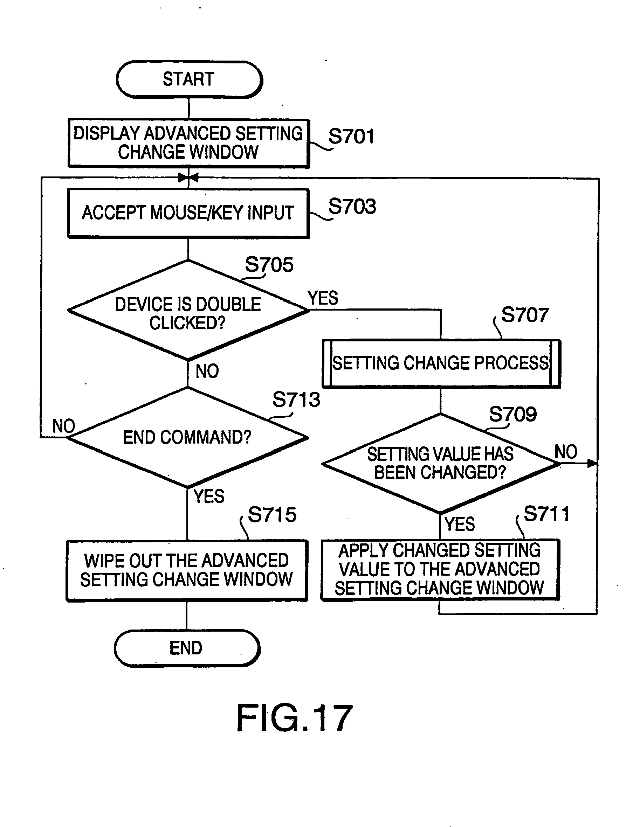

The advanced setting change window process is a process for making settings for each device on an individual basis. To a device which is not subjected to the advanced setting change window process, setting data identical to the representative device or setting data which is modified in the above mentioned process is transmitted. On the other hand, to a device which is subjected to the advanced setting change window process, setting data set in the advanced setting change window process is transmitted. Fig. 17 is a flowchart illustrating the advanced setting change window process.

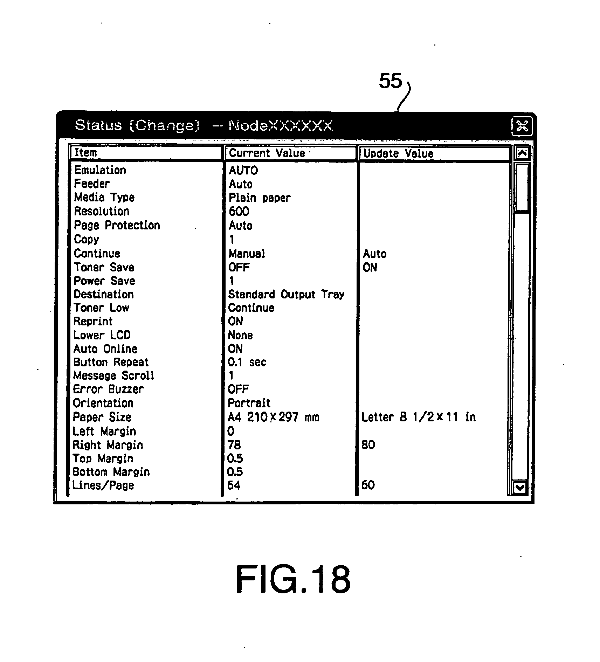

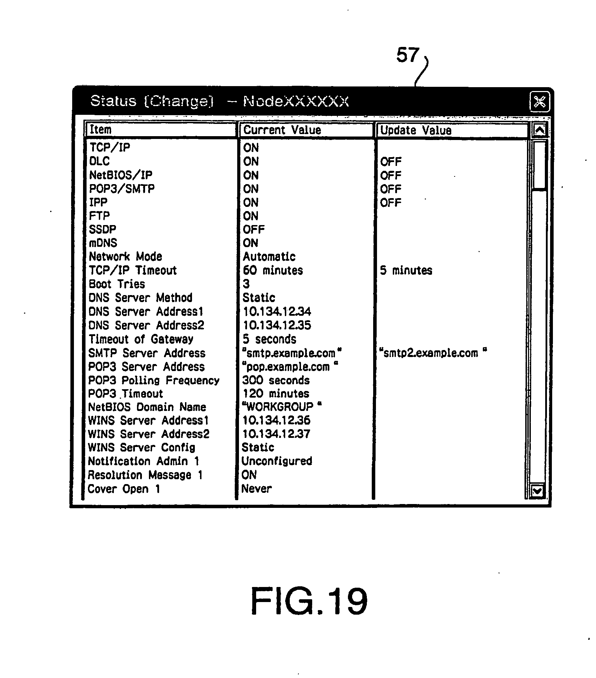

Firstly, the PC 1A displays an advanced setting change window (S701). The setting items are different between the first data setting transmission process for setting the principal function of a target device and the second data setting transmission process for setting NIC (network interface card) of the target device. Specifically, an advanced setting change window 55 as shown in Fig. 18 is displayed in the case of the first data setting transmission process, and an advanced setting change window 57 as shown in Fig. 19 is displayed in the case of the second data setting transmission process.

In each of the advanced setting change windows 55 and 57, various items of which setting values are to be transmitted to a device targeted for the advanced setting (a target device) are displayed in an "Item" box, setting values (current setting values) obtained from the target device are displayed in a "Current Value" box, and setting values to be updated are displayed in an "Update value" box. An item whose setting value in the "Update value" box is a blank represents that an "Update value" and a "Current value" of such an item are identical to each other. If a device represented as a "Connection Error" in the device list display field 43 has been selected for the advanced setting change window process, all of fields in the "Current value" box and "Update value" box are represented as blanks. Although setting items are different between the advanced setting change window 55 and the advanced setting change window 57, these windows 55 and 57 are functionally equal to each other.

In step S703, the PC 1A accepts the input from the input device 105 (e.g. a mouse and keys). If one of items in the advanced setting change window 55 or the advanced setting change window 57 has been double clicked in step S703, the PC 1A judges that a setting value is changed (S705:YES). Then, the PC 1A executes a setting change process.

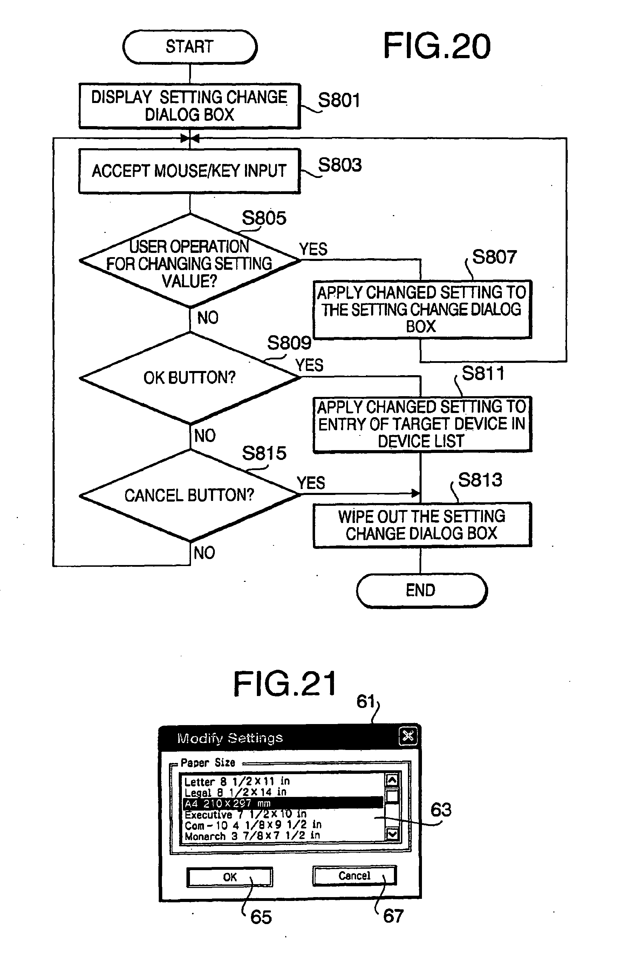

Fig. 20 is a flowchart illustrating the setting change process. Firstly, the PC 1A displays a setting change dialog box. Contents to be displayed in the setting change dialog box changes depending on the type of an item double clicked in the advanced setting change window 55 or the advanced setting change window 57. Fig. 21 shows a setting change dialog box 61 which is displayed if the item "PaperSize" in the advanced setting change window 55 is double clicked.

As shown in Fig. 21, the setting change dialog box 61 includes a setting value selection box 63, an "OK" button 65 and a "Cancel" button 67. The setting value selection box 63, the "OK" button 65 and the "Cancel" button 67 are included in the setting change dialog box for all of the items in the advanced setting change windows 55 and 57.

After the setting change dialog box is displayed (S801), the PC 1A accepts the input from the input device 105 (e.g. a mouse and keys) in step S803. If one of setting values in the setting value selection box 63 is clicked, the PC 1A judges that a user operation for changing the setting value has been conducted (S805:YES). Then, the PC 1A applies the change of the setting value to the representation in the setting value selection box 63 (S807). Next, control returns to step S803.

If the user operation for changing the setting value has not been conducted (S805:NO), control proceeds to step S809. In step 809, it is judged whether the "OK" button 65 is pressed. If the "OK" button 65 is pressed (S809:YES), the changed setting value is applied to a corresponding entry (i.e. an entry corresponding to the device targeted for the advanced setting) in the device list (S811). Thus, the setting data designated in the setting change process is registered in the corresponding entry in the device list.

Since the setting data set by the advanced setting is unique to the device targeted for the advanced setting, the setting data set by the advanced setting is stored separately from changed setting data common to the other devices. After the step S811 is finished, the setting change dialog box 61 is wiped out (S813). Then, the setting change process terminates.

If it is judged in step S809 that the "OK" button 65 is not pressed (S809:NO), control proceeds to step S815. In step S815, it is judged whether the "Cancel" button 67 is pressed. If the "Cancel" button 67 is pressed (S815:YES), step S813 is processed and then the setting change process terminates. If the "Cancel" button 67 is not pressed (S815: NO), control returns to step S803 since no effective operation is conducted.

Referring now to Fig. 17, after the setting change process shown in Fig. 20 (i.e. step S707) is finished, control proceeds to step S709. In step S709, it is judged whether setting values have been changed or not. Specifically, in step S709, the PC 1A judges whether the "OK" button 65 has been pressed or the "Cancel" button 67 has been pressed. If the setting values have been changed (S709:YES), changed setting values are applied to the advanced setting change windows 55 and 57 (S711). Then, control returns to step S703.

If the setting values have not been changed (S709:NO), control returns to step S703 without executing step S711.

If no device is double clicked in the advanced setting change windows 55 and 57 (i.e. setting values have not been changed) (S745:NO), control proceeds to step S713. In step S713, it is judged whether an end command (e.g. clicking a "x" button at the upper right position of a window, or pressing of "Alt" + "F4" keys) is inputted. If the end command is not inputted (S713:NO), control returns to step S703 since no effective operation is conducted. If the end command is inputted (S713:YES), the advanced setting change window 55 or 57 is wiped out (S715), and then the advanced setting change window process terminates.

As shown in Fig. 13, after the advanced setting change window process shown in Fig. 17 (i.e. step S531) is finished, control returns to step S507.

Referring now to Fig. 7, if the transmission confirmation dialog process of steps S501 to S531 is finished (i.e. step S105 is finished) by the operation of pressing the "Send" button 53 or the "Cancel" button 51, control proceeds to step S107 where the PC 1A judges whether the "Send" button 53 has been pressed. If the "Send" button 53 has not been pressed (S107:NO), control returns to step S 101 to start again the data setting transmission process since in this case the "Cancel" button 51 has been pressed.

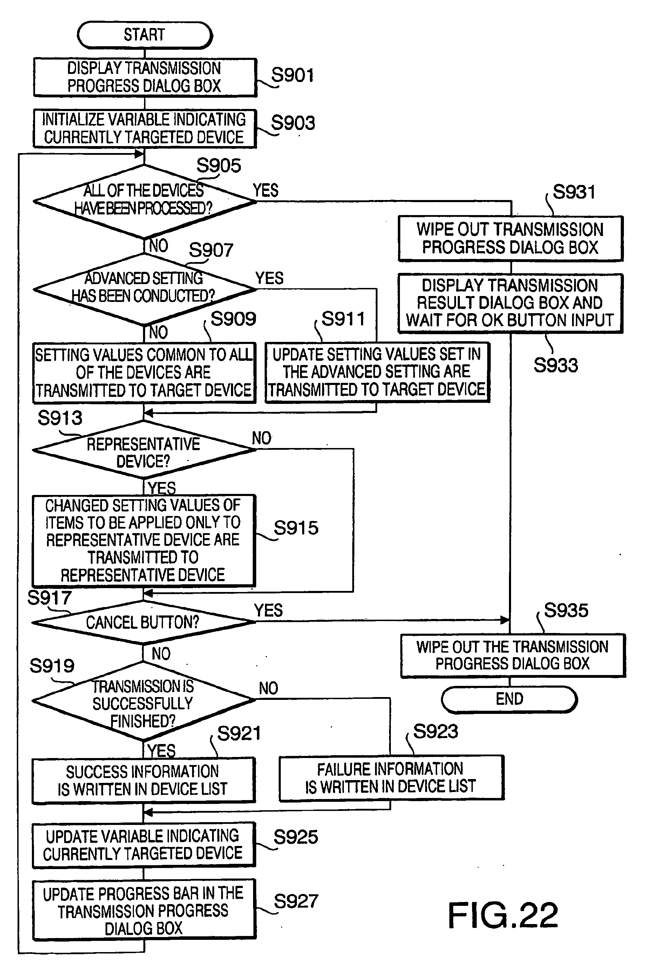

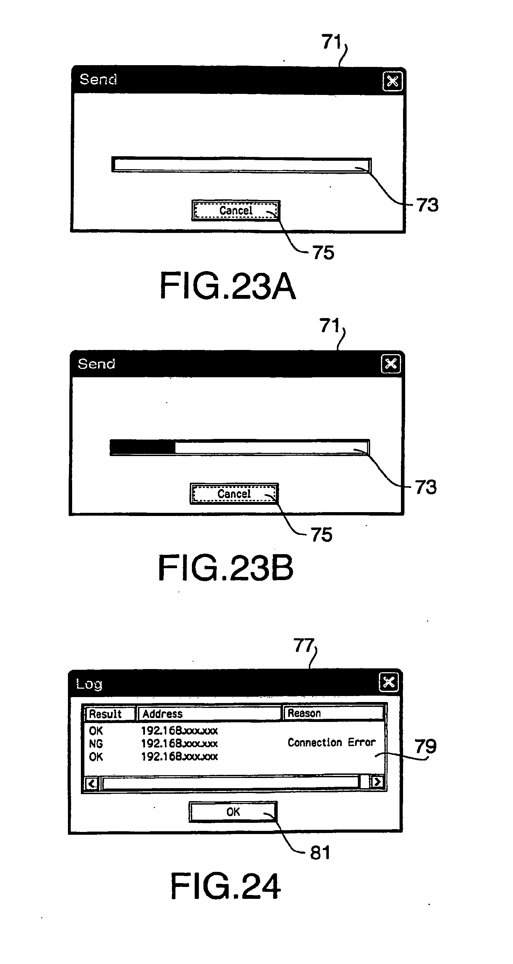

If the "Send" button 53 has been pressed (S107:YES), control proceeds to step 109 where a setting data package transmission process is executed. Fig. 22 is a flowchart illustrating the setting data package transmission process. Firstly, the PC 1A displays a transmission progress dialog box 71 which is shown in Figs. 23A and 23B (S901). As shown in Figs. 23A and 23B, the transmission progress dialog box 71 includes a progress bar indication field 73 and a "Cancel" button 75. In the transmission progress dialog box 71, the progress of data transmission is represented. In an initial state, no progress bar is displayed in the progress bar indication field 73 (see Fig. 23A).

After the transmission progress dialog box 71 is displayed, the PC 1A initializes a variable i indicating the number of a target device being subjected to the setting data package transmission process (S903). The variable i is used to processes devices one by one from the top of the device list. To point at a device listed at the top of the device list, the variable i is assigned 1 (i.e. i=1) in step S903.

Next, the PC 1A judges whether all of the devices have been processed (S905). Specifically, in step S905 the PC 1A judges whether a condition i≤n (where n represents the total number of devices in the device list) holds or not. If all of the devices in the device list have not been processed (S905:NO), control proceeds to step S907. In step S907, the PC 1A judge whether the advanced setting has been conducted.

If the advanced setting has not been conducted (S907:NO), control proceeds to step S909 where the setting values common to all of the devices in the device list are sent to the target device (the i-th device) by using setting values obtained from the representative device (i.e. the representative device selected on the user interface (UI) displayed before the initiation of the data setting transmission process) (S909). Specifically, in step S909, the data transmission is executed as follows. If the transmission type designated in the transmission type changing instruction field 25 is the "Send all Current Values", setting data identical to that of the representative device is transmitted to the target device. If the transmission type designated in the transmission type changing instruction field 25 is the "Send all Update Values", updated setting data which is updated with respect to current settings of the representative device is transmitted to the target device. If the transmission type designated in the transmission type changing instruction field 25 is the "Send Current and Update Values", both of the setting data identical to that of the representative device and the updated setting data which is updated with respect to current settings of the representative device are transmitted to the target device.

If the advanced setting has been conducted (S907:YES), update setting values set in the advanced setting change window process are transmitted to the target device (S911). The processes in steps S909 and S911 are executed in accordance with SNMP. That is, the PC 1A sends a data set request to the target device (the i-th device). The target device stores the setting values in the MIB (e.g. the MIB 311 in the case of the printer 3), which is managed by the target device, in accordance with the data set request transmitted from the PC 1A.

Data updating processes of steps S909 and S911 are substantially equal to each other except for the difference of the type of data to be transmitted. Examples of the data updating process to be applied to both of the steps S909 and S911 are described in detail later.

Next, the PC 1A judges whether the target device (being subjected to the setting data package transmission process) is the representative device (S913). If the target device is the representative device (S913:YES), changed setting values with regard to items to be applied only to the representative device are transmitted the target device (S915). The items to be applied only to the representative device are determined in advance. For example, in the case of settings of the NIC (network interface card), the items to be applied only to the representative device are "Node Name" (a node name of the NIC), "Password" (an administrator password), service filter settings, "IP Address" (an IP address of the NIC), "Subnet Mask" (a subnet mask of the NIC), "Gateway" (gateway (router) address settings), "IP Config" (settings of a scheme of IP address acquisition), "Printer E-mail Address" (an E-mail address assigned to a printer/MFP), "POP3 account name" (an account name of a mail box used to access an E-mail sever), "POP3 account Password" (a password for the account of the mail box) because these items have to be set on a network interface card — by — network interface card basis.

A data updating process of step S915 is substantially the same as that of steps S909 and S911 except for the difference of the type of data to be transmitted. Examples of the data updating process to be applied to the steps S909, S911 and S915 are described in detail later.

After the process of step S915 is finished or it is judged in step S913 that the target device is not the representative device (S913:NO), control proceeds to step S917. In step S917, it is judged whether the "Cancel" button is pressed. If the "Cancel" button is not pressed (S917:NO), the PC 1A judges whether the setting data transmission is successfully finished (S919). If the setting data transmission is successfully finished (S919:YES), success information (e.g. letters "OK") indicating that the setting data transmission is successfully finished for the target device is written in the device list (S921). If the setting data transmission is not successfully finished (S919:NO), failure information (e.g. letters "NG") indicating that the setting data transmission is not successfully finished for the target device and information about factors that cause transmission errors are written in the device list (S923).

After the success information or the failure information is written in the device list, the variable (the number) indicating the target device is updated in step S925, for example, by incrementing the variable i by one. Then, the progress bar displayed in the progress bar indication field 73 in the transmission progress dialog box 71 is updated (S927). Specifically, the length of the progress bar to be displayed in the progress bar indication field 73 is determined in accordance with the following expression:

$$[\text{the length of the progress bar}] =$$

$$[\text{the maximum length of the progress bar}] \times [\text{the number of processed devices}] / [\text{the total number}$$

$$\text{of devices}] .$$

Thus, the progress bar having the length obtained from the above expression is displayed in the progress bar indication field 73 as shown in Fig. 23B. Next, control returns to step S905. By repeating a sequence of steps S905 to S927, all of the devices in the device list are processed. If all of the devices have been processed, the judgment result in step S905 becomes "YES". Although, in the above mentioned process from S905 to S927, the variable i which is counted up from 1 to n is used to indicate the target device, another scheme (for example, a scheme in which a pointer indicating an address of an entry of the target device is used) may be used to process devices in the device list sequentially.

If all of the devices have been processed (S905:YES), the PC 1A wipes out the transmission progress dialog box 71 (S931). Then, the PC 1A displays a transmission result dialog box 77 (see Fig. 24), and waits for an operation of the "OK" button 81 (S933). As shown in Fig. 24, the transmission result dialog box 77 includes a transmission result indication field 79 and an "OK" button 81. In the transmission result indication field 79, the success information, the failure information and communication error factors are displayed. For example, "Connection Error" representing that the connection to a device ends in failure and the setting of the device has not been completed, or "Password incorrect" representing that the setting of a device is impossible because of an incorrect password is displayed as the communication error factor in the transmission result indication field 79.

Such representation of information (success or error information) in the transmission result indication field 79 allows the user to recognize a condition regarding setting data update and to deal with a problem appropriately.

If the "OK" button 81 is pressed, control proceeds step S935 where the transmission result dialog box 77 is wiped out. Then, the setting data package transmission process shown in Fig. 22 terminates.

Referring now to Fig. 7, after the process of step S109 (i.e. the setting data package transmission process shown in Fig. 22) is finished, the data setting transmission process shown in Fig. 7 terminates.

If it is judged in step S917 of Fig. 22 that the "Cancel" button is pressed (S917:YES), the PC 1A wipes out the transmission result dialog box 77 (S935). Then, the setting data package transmission process terminates. Therefore, in the case where the judgment result of step S917 is "YES", the process of step S109 of Fig. 17 also terminates.

As described above, if the "Send" button 17 (i.e. "Send Multiple Printer" button 17) in the "General" tab of the NIC setting dialog box 15 is clicked, the PC 1A operates to execute the second data setting transmission process so transmit the setting data. Meanwhile, as shown in Fig. 6, inputting fields for various types of items are provided in the NIC setting dialog box 15 so as to accept user operations for inputting setting data. If the user operation is conducted on the NIC setting dialog box 15, there is a possibility that setting values different from the setting values transmitted by the second data setting transmission process are inputted to the NIC setting dialog box 15.

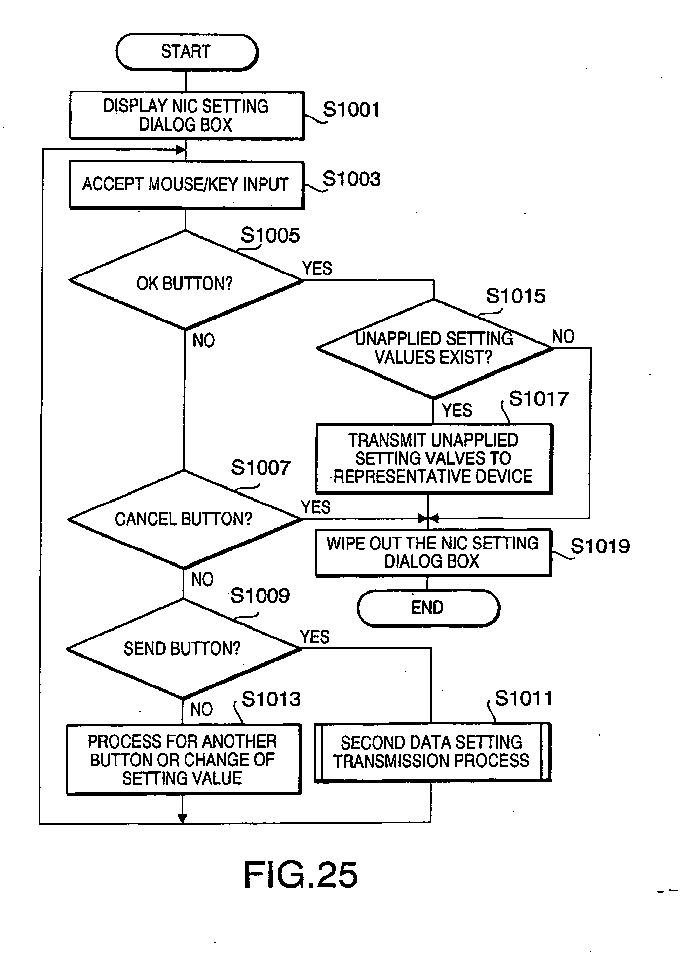

For this reason, an NIC setting dialog displaying process is executed as follows. Fig. 25 is a flowchart illustrating the NIC setting dialog displaying process. Firstly, the PC 1A displays the NIC setting dialog box (S1001). Then, in step S1003, the PC 1A accepts the inputs from the input device (e.g. a mouse and keys). Next, the PC 1A judges whether the "OK" button is pressed in step S1005, judges whether the "Cancel" button is pressed in step S1007, and judges whether the "Send" button is pressed in step S1009.

If it is judged in step S1009 that the "Send" button is pressed (S1005:NO,S1007:NO,S1009:YES), the second data setting transmission process described above is executed (S1011). Then, control returns to step S1003.

If it is judged in step S1009 that the "Send" button is not pressed (S1005:NO,S1007:NO,S1009:NO), another process for treating user operations for changing settings is executed (S1013). Then, control returns to step S1003.

Since the NIC setting dialog displaying process includes the step S1013, there is a possibility that a user has inputted setting values on the NIC setting dialog box when its is judged in step S1005 that the "OK" button is pressed. If the user has inputted setting values on the NIC setting dialog box, it is necessary to transmit the setting values inputted by the user on the NIC setting dialog box to the representative device independently of the process of step S1011.

For this reason, if it is judged in step S1005 that the "OK" button is pressed (S1005:YES), the PC 1A judges whether unapplied setting values exist in the inputting fields of the NIC setting dialog box (S1015). If the unapplied setting values exist (S1015:YES), the PC 1A transmits the unapplied setting values to the representative device (S1017). Next, the PC 1A wipes out the NIC setting dialog box 15 (S1019). Then, the NIC setting dialog displaying process terminates.

If it is judged in step S1007 that the "Cancel" button is pressed (S 1007:YES), the PC 1A wipes out the NIC setting dialog box 15 (S1019). Then, the NIC setting dialog displaying process terminates.

A data updating process of step S1017 is substantially the same as that of steps S909, S911 and S915 except for the difference of the type of data to be transmitted.

Hereafter, eight examples of the data updating process executed in each of S909, S911, S915, and S1017 and a recovering process for the recovering of settings will be explained.

FIRST EXAMPLE

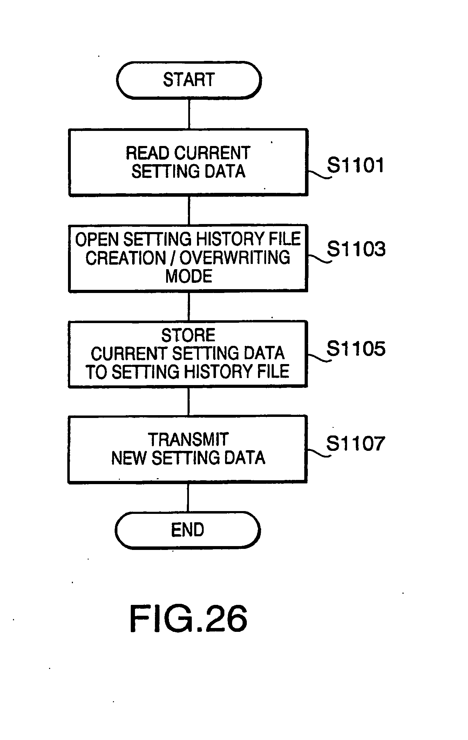

Fig. 26 is a flowchart illustrating a data updating process which is to be executed in each of the steps S909, S911, S915 and S1017 as a subroutine. As shown in Fig. 26, firstly, the PC 1A obtains current setting data (i.e. data currently set to a target device which is targeted for the data updating process) from the target device (S1101). Specifically, step S1101 is executed in accordance with SNMP. The PC 1A sends a data acquisition request to the target device in accordance with SNMP. Then, the target device sends current setting data stored in the MIB (e.g. the MIB 311 of the printer 3), which is managed by the target device, back to the PC 1A as a response to the data acquisition request. The PC 1A receives the current setting data from the target device. If there are a plurality of setting items to be processed in step S1101, such data acquisition of step S1101 is executed for each of the plurality of setting items.

Next, the PC 1A opens a setting history file in a creation mode or an overwriting mode (S1103). In step S 1103, the setting history file may be created in the storage device 107 provided in the PC 1A. A file name unique to the target device is assigned to the setting history file. For example, a node name, an IP address, or a MAC address of the target device may be used as a part of or all the file name of the setting history file. If a file having a file name newly prepared in step S1103 does not exist in the PC 1A, a setting history file having the newly prepared file name is created in the PC 1A. If the file having the newly prepared file name already exists in the PC 1A, the existing setting history file is opened in the overwriting mode in step S 1103.

Meanwhile, there may be a case where some of steps S909, S911, S915, and S1017 are executed sequentially in the process of Fig. 22 or Fig. 25. However, in such a case, a setting history file created in a previous step is not overwritten in a next step.

It is understood that since step S909 or S911 is executed a plurality of times, and the number of times step S909 or S911 is executed is equal to the total number of devices registered in the device list. Therefore, the number of setting history files created in one data setting transmission process becomes equal to the number of devices targeted for the data setting transmission process.

Next, the PC 1A stores the obtained current setting data into the setting history file (S 1105). If there are a plurality of setting items to be processed in step S 1105, the storing of setting data (S 1105) is executed for all of the plurality of setting items. The stored setting data will be used as recovering data in a recovering process which is described in detail later.

Next, in step S1107, the new setting data to be applied to the target device is transmitted to the target device. Then, the data updating process terminates.

As described above, the type of setting data to be transmitted to the target device varies among the steps S909, S911, S915, and S1017. More specifically, in the case of the step S909, setting data to be transmitted is data to be updated with regard to all of the devices in the device list. In the case of the step S911, the setting data to be transmitted is update setting values prepared in the advanced setting. In the case of the step S915, setting data to be transmitted is the changed setting values with regard to setting items to be applied only to the representative device. In the case of the step S1017, the setting data to be transmitted to the target device is unapplied setting values modified on the NIC setting dialog box 15.

The process of step S1017 is executed in accordance with SNMP. Specifically, the PC 1A sends a data set request to the target device in accordance with SNMP. Then, the target device stores the setting data in the MIB (e.g. the MIB 311 of the printer 3) managed by the target device as a response to the data set request sent by the PC 1A.

By updating the setting data using the above mentioned data updating process shown in Fig. 26, the setting history file is created for each of the target devices. The thus created setting history files are used in the recovering process which will be described later.

Various types of data storing formats may be used to store data in the setting history file. For example, a so-called CSV (Comma Separated Values) format may be adopted for the setting history file. In this case, the setting data are stored in the setting history file as shown in the following Table 1.

TABLE 1

| Oid | TYPE OF VALUE | Setting Value |
|---|---|---|
| 1.3.6.1.2.1.25.3.2.1.3.1 | 4 | PrinterXX-XX |
| 1.3.6.1.2.1.1.1.5 | 4 | PRI001 |
| 1.3.6.1.2.1.1.1.6 | 4 | Location1 |
| 1.3.6.1.2.1.1.1.4 | 4 | aa@bbb.cc.d |
| 1.3.6.1.2.1.43.7.1.1.1 | 2 | 1 |
| 1.3.6.1.2.1.43.7.1.2.1 | 2 | 1 |

If n items are updated in one update of settings (i.e. in one data setting transmission process), n groups of data are stored in the setting history file. As shown in Table 1, the Oid, the type of value and setting value are stored for each of the n groups of data. In Table 1, "Oid" represents an identifier unique to each information item in the MIB. By specifying "Oid" in the communication by SNMP between the PC 1A and a device, information of a desired item is stored in or read from the MIB. The "TYPE OF VALLIE" represents information as to whether a setting value is integers or letters. In this embodiment, a primitive type value based on the MIB is used (i.e. "2:Integer", "4:String"). The "Setting Value" represents a previous setting value which is set to the target device before the update of settings is performed.

Hereafter, the recovering process is explained. The recovering process is used to restore settings in a device to a previous state after the data setting transmission process is finished. If a trouble arises in a device due to the setting data set by the data setting transmission process, the recovering process is utilized to solve the trouble.

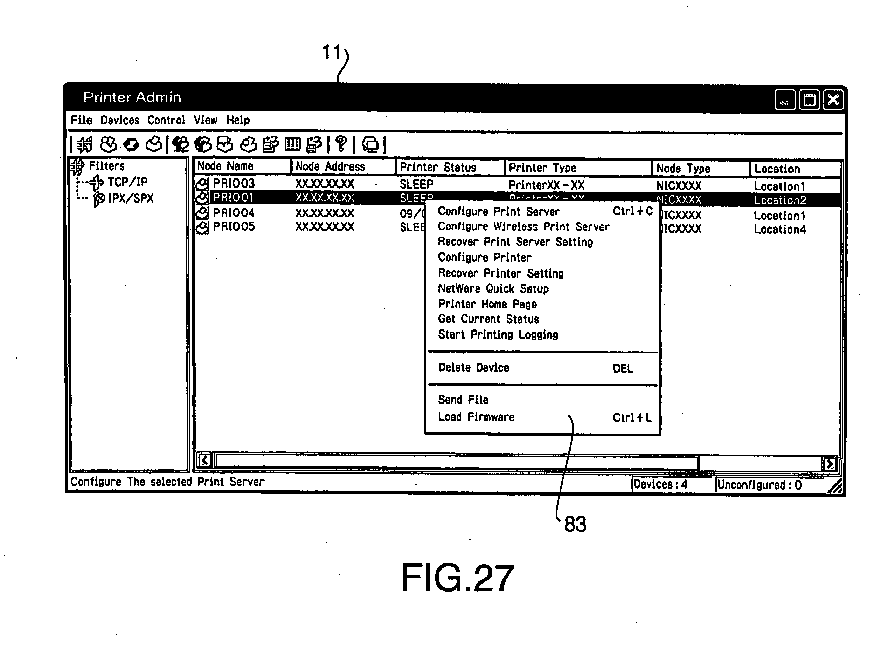

To start the recovering process, a user initiates the device management tool. Then, the device setting management tool initial screen 11 shown in Fig. 27 is displayed. If the user designates one of the printing devices on the device setting management tool initial screen 11 and right-clicks on the designated device, a menu box 83 (which is frequently called as a context menu or a right-click menu) is displayed over the device setting management tool initial screen 11. By selecting (clicking) "Recover Printer Setting" or "Recover Printer Server Setting" of menus in the menu box 83, the recovering process is started.

If the user selects the "Recover Printer Setting", the recovering process for recovering setting data regarding the principal function of a printing device (i.e. regarding the first data setting transmission process) is executed. On the other hand, if the user selects the "Recover Printer Server Setting", the recovering process for recovering setting data regarding the network function of an NIC of a printing device (i.e. regarding the second data setting transmission process) is executed.

Another user interface for starting the recovering process is also prepared as follows. If the user clicks "Config" on the menu bar of the printer setting function initial screen 13 and then clicks the "Recover Printer Setting" of the pull-down menu displayed by the click of the "Config", the recovering process for recovering setting data regarding the principal function of the printing device is started. If the user clicks a "Recover Setting" button 18 which is displayed when the "General" tab is selected in the NIC setting dialog box 15 (see Fig. 6), the recovering process for recovering setting data regarding the network function of the NIC of the printing device is started.

Although the function and setting items to be processed in the recovering process vary depending on an initiation factor of the recovering process, a general flow can be applied to all of the types of recovering processes initiated by different factors. Therefore, the general flow of the recovering process will be explained hereafter.

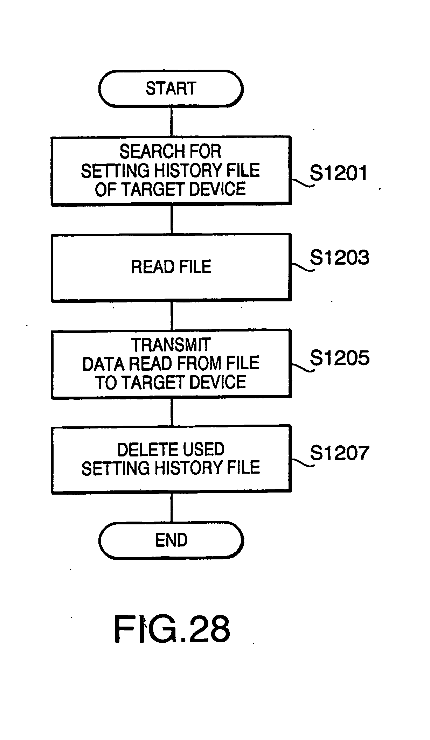

Fig. 28 is a general flow of a recovering process according to the first example. As shown in Fig. 28, firstly, the PC 1A searches for a setting history file of a target device which is a device targeted for the recovering process (S 1201). Since a file name of the setting history file is unique to the target device, the setting history file is securely searched in step S1201 in accordance with the file name.

Next, the PC 1A reads the setting history file searched in the step S1201 (S1203). As a result, data such as setting values shown in Table 1 is stored in the PC 1A.

Next, in step S1205, the PC 1A transmits the setting values read at step S1203 to the target device. Specifically, the PC 1A sends a data set request to the target device in accordance with SNMP. The PC 1A sends a data packet containing an Oid and a corresponding setting value for each of the data groups. The target device which received the data packet stores the setting value into a memory area of the MIB corresponding to the designated Oid contained in the received data packet.

After data transmission in step S1205 is finished, the PC 1A deletes the setting history file used in the recovering process (S1207). Then, the recovering process terminates.

As described above, according to the first example, new setting data to be applied to a plurality of target devices is transmitted to the plurality of target devices at a time in the data setting transmission process. In addition, previous setting data are stored in a setting history file for each of the target devices. In cases where a trouble arises in a device after the update of settings is executed, a user can restore settings of the device to a previous state by executing the recovering process.

SECOND EXAMPLE

Hereafter, a data updating process to be executed in each of S909, S911, S915, and S1017 and a recovering process according to a second example will be explained. Since initiating manners of these processes, and an internal structure of a setting history are substantially the same as those of the first example, explanations thereof will not be repeated.

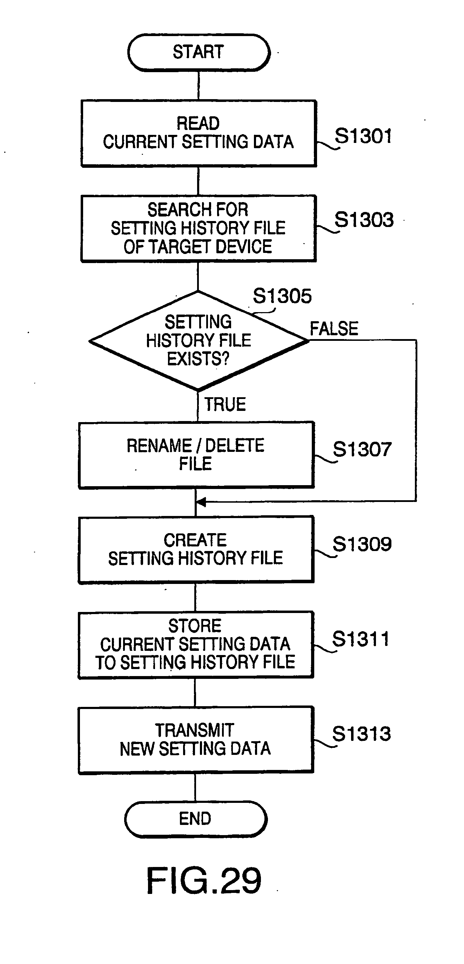

Fig. 29 is a flowchart illustrating the data updating process according to the second example. As shown in Fig. 29, firstly, the PC 1A obtains current setting data from the target device (S1301). Then, the PC 1A searches for a setting history file of the target device using a file name unique to the target device (S1303).

Next, in step S 1305, the PC 1A judges whether the setting history file exists in the PC 1A. If the setting history file exists in the PC 1A (S1305:TRUE), the PC 1A changes the file name of the setting history file searched in step S 1303 or deletes the setting history file searched in step S1303 (S1307). Similarly to the first example, a file name unique to a target device is created and is used to search for a setting history file of a desired device. In this example, for each of target devices, three setting history files are created at the maximum. A creation rule for creating setting history files is as follows. Suffixes ("1", "2", or "3") are added to a character string unique to a target device.

Suffixes "1 ", "2" and "3" are used to represent the latest file, the second latest file, and the third latest file, respectively. Therefore, if the setting history file having a file name including the suffix "3" already exists in the PC 1A, the setting history file having the file name including the suffix "3" is deleted, and then the PC 1A judges whether a setting history file having a file name including a suffix "2" already exists or not. If the setting history file having the file name including the suffix "2" already exists, the suffix of this file is changed from "2" to "3". If a setting history file having a file name including a suffix "1" already exists, the suffix of this file is changed from "1" to "2".

After the step S 1307 is finished or if it is judged in step S 1305 that the setting history file does not already exist (S1305:FALSE), control proceeds to step S 1309. In step S1309, the setting history file having a file name including a suffix "1" is created. That is, the latest setting history file is created in step S1309. As described above, if the setting history file having a file name including a suffix "1" is found in step S1307, the suffix of the file name of such a setting history file is changed from "1" to "2". Therefore, at a stage of step S1309, a setting history file having a file name including a suffix "1" does not exist. In this regard, the data updating process of the second example is different form the data updating process of the first example in which the setting history file is overwritten.

Similarly to step S1105 of the first example, in step S1311, the PC 1A stores the current setting data obtained in step S1301 into the setting history file created in step S1309. Then, in step S 1313, the new setting data to be applied to the target device is transmitted to the target device. Then, the data updating process terminates.

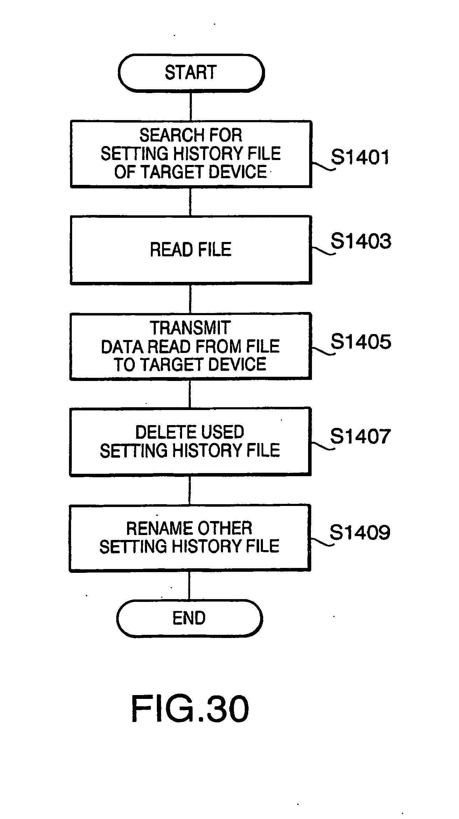

Hereafter, the recovering process according to the second example is explained. Fig. 30 is a flowchart illustrating the recovering process according to the second example. Similarly to steps S1201 to S1207 of the recovering process of the first example, steps S 1401 to S 1407 are executed, respectively. Firstly, the PC 1A searches for a setting history file of the target device (S1401). Next, the PC 1A reads the setting history file searched in the step S1401 (S1403). In step S 1405, the PC 1A transmits setting values read at step S 1403 to the target device. After the data transmission in step S1405 is finished, the PC 1A deletes the setting history file used in the recovering process (S 1407).

After the step S 1407 is finished, control proceeds to step S 1409 where file names of the remaining setting history files are renamed. Specifically, in step S 1409, if a setting history file having file name including a suffix "2" already exists, the suffix of the file name of such a setting history file is changed from "2" to "1". Further, in step S1409, if a setting history file having file name including a suffix "3" already exists, the suffix of the file name of such a setting history file is changed from "3" to "2".

As described above, according to the second example, current setting data are stored in the setting history file when the data setting transmission process (the update of settings) is executed. In cases where a trouble arises in a device after the update of settings is executed, a user can restore settings of the device to a previous state by executing the recovering process.

In addition, according to the second example, the last three setting history files are stored in the PC 1A by using the suffixes "1", "2" and "3". Therefore, the user can go back to the latest setting, the second latest setting or the third latest setting. Since the setting history file older than that used in the first example can be utilized in the recovering process, a possibility that a trouble is solved increases in comparison with the case of the first example.

Although in this example the latest three files are stored and used for the recovering process, more than three setting history files may be created and used for the recovering process. The updating process may be configured such that a user is allowed to designate the number of setting history files created and used for each of the target devices.

Although in the second example current setting data obtained in one data updating process is stored in one setting history file, a plurality pieces of current setting data obtained by executing the data updating process a plurality of times may be stored in a single setting history file. In this case, a header for identifying each of the plurality of pieces of current setting data uniquely may be added to the single setting history file. By reading out the header, desired current setting data are obtained from the single setting history file.

THIRD EXAMPLE

Hereafter, a recovering process according to a third example is explained. The recovering process according to the third example is a variation of the recovering process according to the second example. The data updating process according to the second example is executed, before executing the recovering process according to the third example.

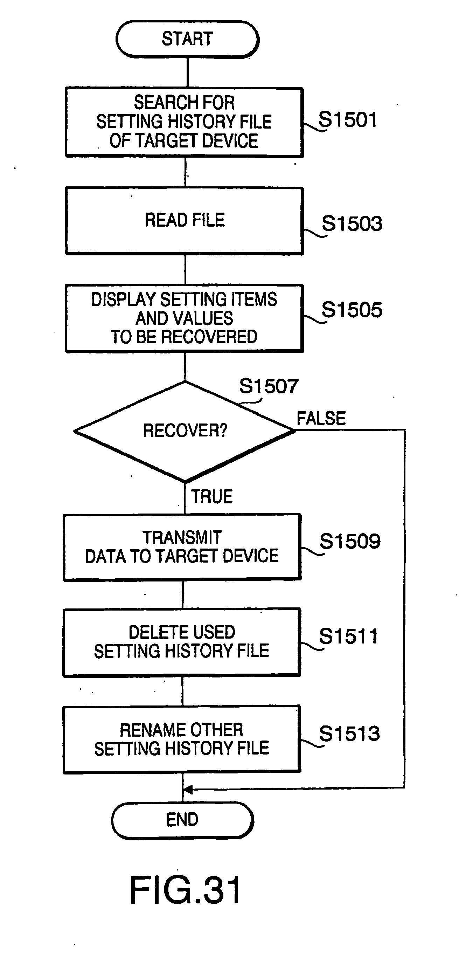

Fig. 31 is a flowchart illustrating the recovering process according to the third example. As shown in Fig. 31, firstly, the PC 1A searches for a setting history file of the target device using a file name unique to the target device (S1501). Then, the PC 1A reads data from the setting history file searched in step S 1501 (S1503).

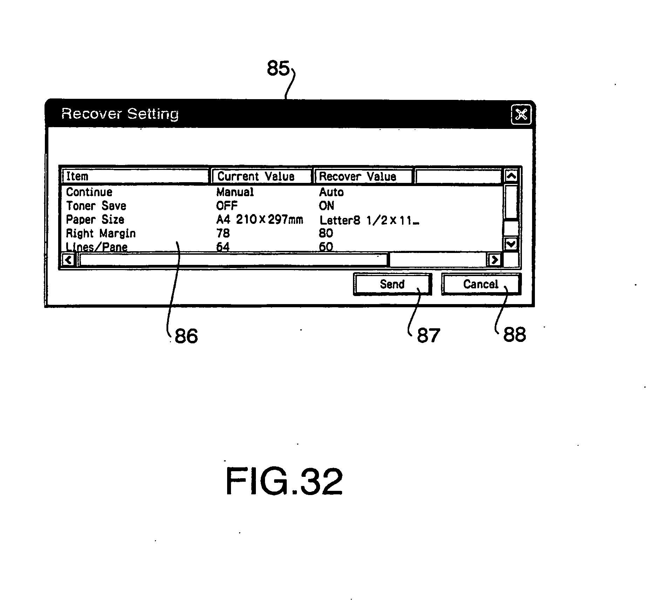

Next, the PC 1A displays setting items and corresponding setting values on the screen of the PC 1A (S1505). Specifically, the PC 1A displays a "Recover Setting" dialog box 85 on the screen of the display unit 106 as shown in Fig. 32. As shown in Fig. 32, the "Recover Setting" dialog box 85 includes a information display field 86, a "Send" button 87, and a "Cancel" button 88. In the information display field 86, setting items, current setting values, and previous setting values used for the recovering process are displayed in fields of "Item", "Current Value", and "Recover Value", respectively. Such information allows a user to decide whether to execute the recovering of previous settings.

After checking the information display field 86, the user decides whether to execute the recovering of previous settings. If the user decided to execute the recovering of previous settings, the user pushes the "Send" button 87 on the "Recover Setting" dialog box 85. If the user decided not to execute the recovering of previous settings, the user pushes the "Cancel" button 88 on the "Recover Setting" dialog box 85.

The PC 1A judges whether to execute the recovering of previous settings in accordance with instructions inputted by the user using the "Recover Setting" dialog box 85 (S 1507). If the recovering of previous settings is not executed (S1507:FALSE), the recovering process terminates. If the recovering of previous settings is executed (S1507: TRUE), setting values read from the setting history file in the step S 1503 and are transmitted to the target device (S1509). After the data transmission is finished, the setting history file used in this process is deleted (S1511). Next, similarly to step S1409 of the second example, in the step S1409, file names of the remaining setting history files are renamed.

Similarly to the second example, in cases where a trouble arises in a device after the update of settings is executed, a user can restore settings of the device to a previous state by executing the recovering process.

In addition, according to the third example, both of the setting data currently set to the target device and the previous setting data to be used for the recovering process are displayed on the screen of the PC 1A to allow the user to decide whether to execute the recovering of settings. Therefore, the usability is enhanced.

FOURTH EXAMPLE

Hereafter, a recovering process according to a fourth example is explained. The recovering process of the fourth example is a variation of the recovering process according to the third example. Therefore, the data updating process according to the second example is executed, before executing the recovering process according to the third example. In the following, to elements, which are substantially the same as those of the first to third examples, the same reference numbers are assigned, and explanations thereof will not be repeated.

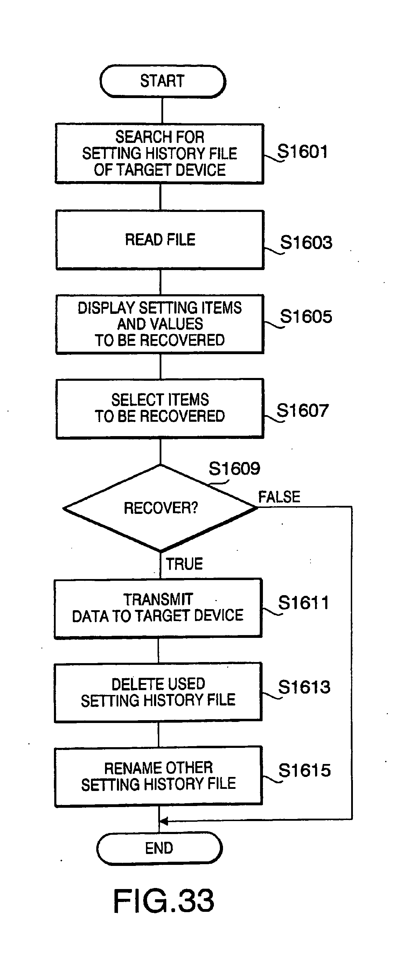

Fig. 33 is a flowchart illustrating the recovering process according to the fourth example. As shown in Fig. 33, firstly, the PC 1A searches for a setting history file of the target device using a file name unique to the target device (S1601). Then, the PC 1A reads data from the setting history file searched in step S1601 (S1603).

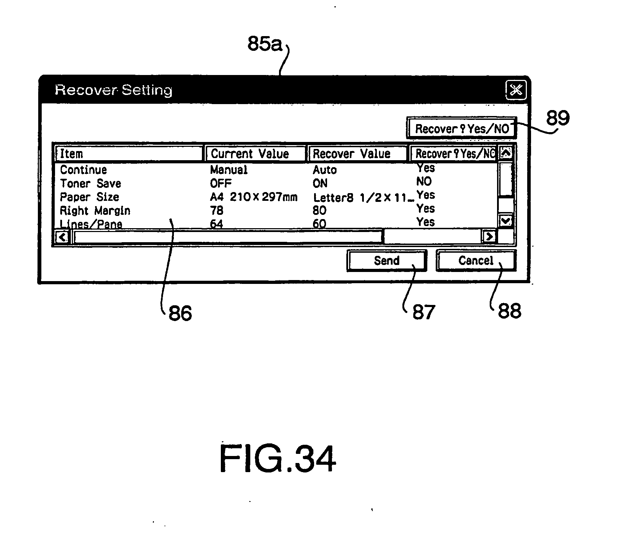

Next, the PC 1A displays setting items and corresponding setting values on the screen of the PC 1A (S1605). Specifically, the PC 1A displays a "Recover Setting" dialog box 85a on the screen of the display unit 106 as shown in Fig. 34. As shown in Fig. 34, the "Recover Setting" dialog box 85a includes the information display field 86, the "Send" button 87, and the "Cancel" button 88. In addition, a "Recover? Yes/No" button 89 is provided on the "Recover Setting" dialog box 85a.

In step S 1607, by checking setting items (displayed in the field "Item"), current setting values (displayed in the field "Current Value"), and previous setting values used for the recovering process (displayed in the field "Recover Value") displayed in the information display field 86, the user decides whether to include each setting item in targets of the recovering of previous settings using the "Recover? Yes/No" button 89. That is, in step S1607, the user is allowed to select setting items to be included in the restoring of previous settings.

Whether the setting item is targeted for the restoring of previous settings is displayed by letters "Yes" or "No" in a "Recover? Yes/No" field. Data in the "Recover? Yes/No" field is switched between "Yes" and "No" each time the "Recover? Yes/No" button 89 is pressed.

After the user decides whether to include each setting item in targets of the recovering of previous settings for each of the target devices, the user decides whether to execute the restoring of previous settings in step S1607. If the user decided to execute the recovering of previous settings, the user pushes the "Send" button 87 on the "Recover Setting" dialog box 85a. If the user decided not to execute the recovering of previous settings, the user pushes the "Cancel" button 88 on the "Recover Setting" dialog box 85a.

The PC 1A judges whether to execute the recovering of previous settings in accordance with instructions inputted by the user using the "Recover Setting" dialog box 85a (S1607). If the recovering of previous settings is not executed (S1607:FALSE), the recovering process terminates. If the recovering of previous settings is executed (S1607: TRUE), setting values read from the setting history file in the step S1603 are transmitted to the target device (S1611). After the data transmission is finished, the setting history file used in this process is deleted (S1613). Next, similarly to step S1513 of the third example, in the step S1615, file names of the remaining setting history files are renamed.

Similarly to the first through third example, in cases where a trouble arises in a device after the setting data update is executed, a user can restore settings of the device to a previous state by executing the recovering process.

In addition, both of the setting values currently set to the target device and the previous setting values to be used for the recovering process are displayed on the screen of the PC 1A. Such information allows the user to decide whether to include each setting item in the recovering of previous settings. It is noted that whether to include the setting item in the recovering of previous settings can be determined for each of the setting items.

FIFTH EXAMPLE

Hereafter, a data updating process according to a fifth example will be explained. The data updating process of the fifth example is a variation of the data updating process according to the second example.

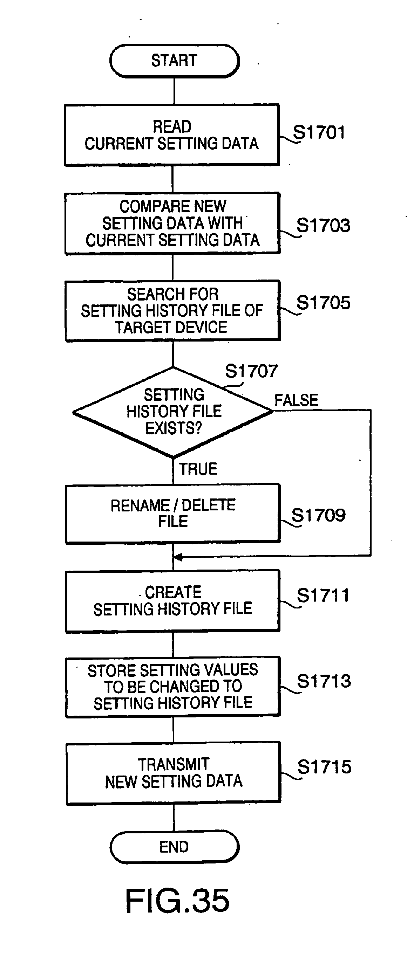

Fig. 35 is a flowchart illustrating the data updating process according to the fifth example. As shown in Fig. 35, firstly, the PC 1A obtains current setting data from the target device (S1701). Then, in step S1703, the PC 1A compares new setting data to be transmitted to the target device with the current setting data obtained in step S1701. The result of the comparing of step S 1703 is temporarily stored in the RAM 303 and is used in step S 1713.

Next, the PC 1A searches for a setting history file of the target device using a file name unique to the target device (S 1705).

Next, in step S1707, the PC 1A judges whether the setting history file exists in the PC 1A. If the setting history file exists in the PC 1A (S1707:TRUE), the PC 1A changes the file name of the setting history file searched in step S 1705 or deletes the setting history file searched in step S 1705 (S1709). Then, the PC 1A creates the setting history file (S1711). If the setting history file does not exist in the PC 1A (S1707:FALSE), step S1709 is skipped. Detailed operations in steps S1705, S1707, S 1709 and S 1711 are substantially the same as those of the steps S1303, S1305, S1307, and S1309 of the second example, respectively.

Next, the PC 1A stores only setting values of setting items, which are to be changed by the data updating process, in the setting history file (S 1713). That is, in accordance with the comparison result of the step S 1703, setting values of setting items, which are not to be updated by the data updating process, are not stored in the setting history file, but only setting values of setting items to be updated by the data updating process are stored in the setting history file.

Then, in step S1715, the new setting data to be applied to the target device is transmitted to the target device. Then, the data updating process terminates.

As described above, according to the fifth example, the current setting data are stored in the setting history file. In addition, according to the fifth example, only setting values of setting items to be updated by the data updating process are stored in the setting history file. Therefore, a file size of the setting history file can be reduced in comparison with the case in which all of the setting items are stored in a setting history file.

SIXTH EXAMPLE

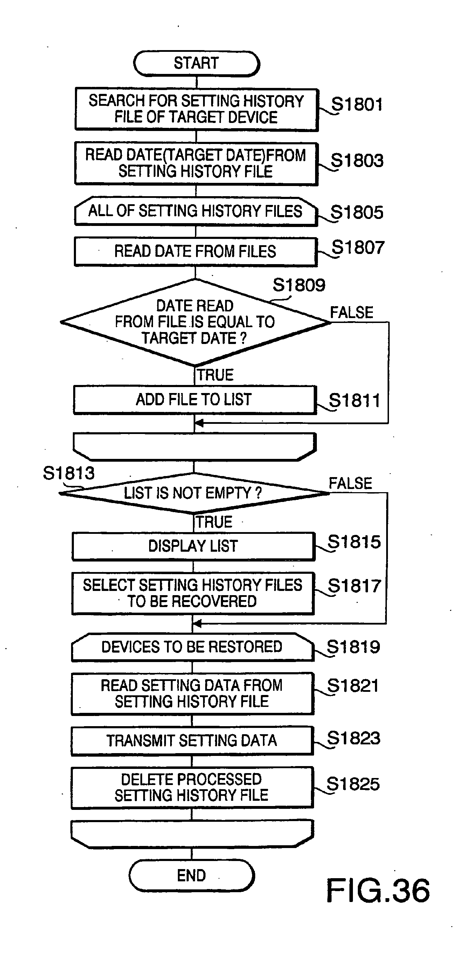

Hereafter, a recovering process according to a sixth example is explained. Fig. 36 is a flowchart illustrating the recovering process according to the sixth example. Since the initiating manner of the recovering processes, and an internal structure of a setting history file are substantially the same as those of the first example, explanations thereof will not be repeated.

As shown in Fig. 36, firstly, the PC 1A searches for a setting history file of a target device (a device targeted for the recovering process of Fig. 36) using a file name unique to the target device (S1801). Then, the PC 1A reads target setting date information from the setting history file searched in step S 1801 (S1803). The target setting date information is information regarding a date and hour at which the data setting transmission process is executed for the target device.

Then, the PC 1A repeats a loop process of steps S1807 to S1811 for each of the setting history files stored in the PC 1A (S1805). In the loop process, the PC 1A reads date and hour information (e.g. a time stamp) from a targeted setting history file currently targeted for the loop process (S 1807). Then, in step S 1809, the date and hour information read at step S 1807 is compared with the target setting date information obtained at step S1803.

If the date and hour (read at step S1807) of the targeted setting history file currently targeted in the loop process is equal to the date and hour obtained from the setting history file at step S 1803 (S 1809:TRUE), the targeted setting history file is added to a history file list (S 1811). If the date and hour (read at step S1807) of the targeted setting history file is not equal to the date and hour obtained from the setting history file at step S1803 (S1809: FALSE), the step S1811 is skipped. It is understood that, by the loop process of steps S1805 to S1811, setting history files created concurrently with the creation of the setting history file of the target device (i.e. a device targeted for the recovering process of Fig. 36) are selected and included in the history file list.

Although setting history files are not created exactly at the same time in one data setting transmission process, in this example setting history files are regarded as being created at the same date and hour in one data setting transmission process. Various types of ways can be used to represent a date and hour (i.e., a time stamp) at which a setting history file is created. For example, a time stamp typically provided by a file system (or an operating system) to a file may be used to represent the creation date and hour of a setting history file. Data (e.g. letters) corresponding to a time stamp of a file may be used as a part of a file name of a setting history file or may be added to a header provided in a setting history file.

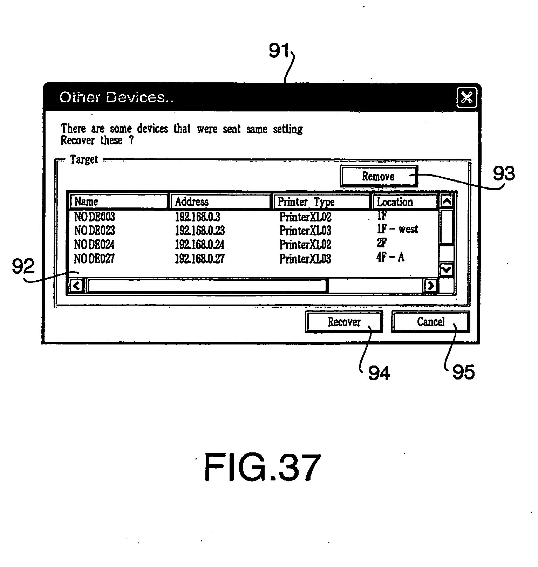

Next, the PC 1A determines whether the history file list generated in the loop process of steps S 1807 to S1811 is empty (S 1813). If the history file list is empty (S 1813:FALSE), control proceeds to step S1819. If the list is not empty (S1813:TRUE), the PC 1A displays an "Other Devices..." dialog box 91, in which information regarding setting history files stored in the history file list is displayed, as shown in Fig. 37. The "Other Devices..." dialog box 91 includes an information display field 92, a "Remove" button 93, a "Recover" button 94, and "Cancel" button 95. In the information display field 92, various types of information including a node name, an IP address, a device type, a location are displayed in a "Name" field, an "Address" field, a "Printer Type" field, and a "Location" field, respectively, for each of the setting history files in the history file list.

The user checks the information displayed on the "Other Devices..." dialog box 91, and selects devices to be targeted for the recovering of previous settings (S 1817). Also, the user is allowed to delete a device from targets of the recovering of previous settings by clicking the device on the "Other Devices...." dialog box 91 first and then pressing the "Remove" button 93. To start the recovering of previous settings, the user presses the "Recover" button 93. If the user decides not to start the recovering of previous settings, the user simply presses the "Cancel" button 95.

Next, the PC 1A repeats a loop process of steps S 1821 to S 1825 (S 1819). In this loop process, data transmission (the recovering of previous settings) is executed for the target device corresponding to the setting history file searched in step S1801 and for the other devices corresponding to setting history files included in the history file list. In this loop process, previous setting values are read from a targeted setting history file currently targeted for the loop process (S1821). Then, the previous setting values are transmitted to the device corresponding to the targeted setting history file (S 1823). After the data transmission is finished, the processed setting history file is deleted (S1825). After the loop process of steps S 1821 to S 1825 is finished for all of the devices to be targeted for the recovering process, the recovering process terminates.

Similarly to the first through fifth example, in cases where a trouble arises in a device after the update of settings is executed, a user can restore settings of the device to a previous state by selecting the device and staring the recovering process for the selected device.

In addition, according to the sixth example, if devices, for which the data setting transmission is executed concurrently with the data setting transmission for a user selected device (i.e., a device targeted for the initiation of the recoverin process of Fig. 36), are found, such devices are notified to the user (i.e., displayed on the "Other Devices..." dialog box 91). Therefore, the recovering of previous settings can be executed for such devices as well as the user selected device.

If inappropriate setting data are transmitted to a plurality of target devices at a time by a data setting transmission process, and a trouble is found in a particular device of the plurality of target devices, such a trouble of the particular device may also be caused in some other devices of the plurality of target devices. However, according to the sixth example, devices having a possibility of causing the same problem as that of the user selected device are notified to the user. Therefore, the user can prevent the problem, which will be caused in devices other than the user selected device, before they happen.

SEVENTH EXAMPLE

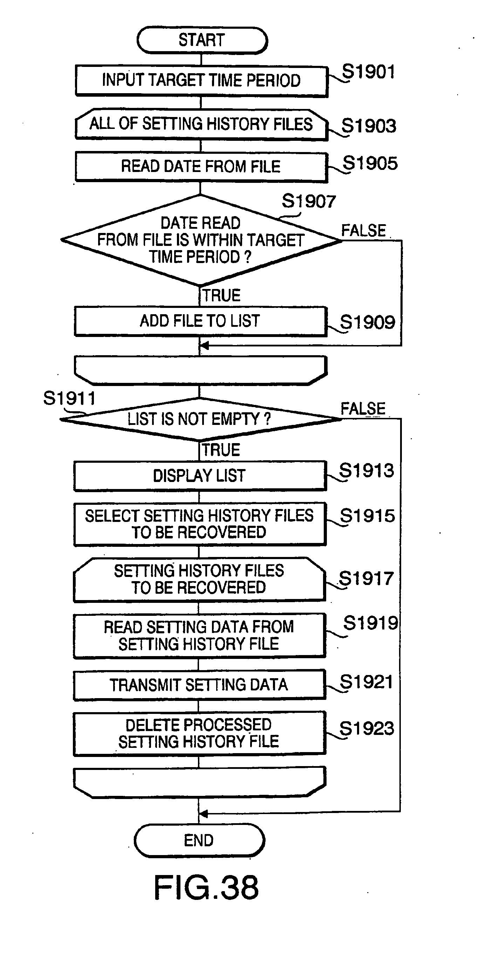

Hereafter, a recovering process according to a seventh example is explained. Fig. 38 is a flowchart illustrating the recovering process according to the seventh example. Since the initiating manner of the recovering process and an internal structure of a setting history file are substantially the same as those of one of the above mentioned examples, explanations thereof will not be repeated.

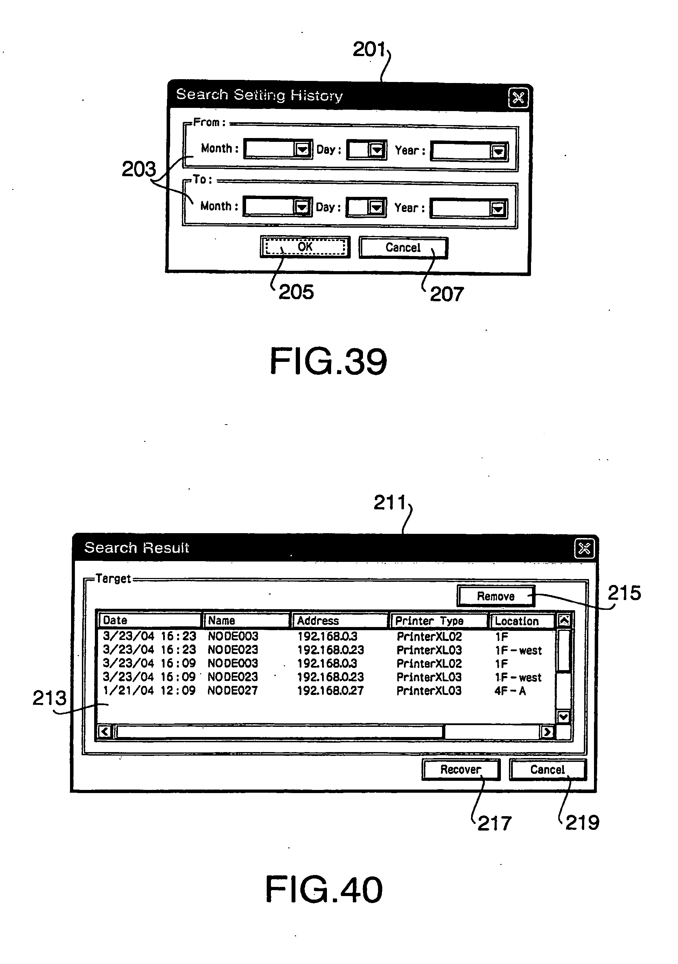

As shown in Fig. 38, firstly, the PC 1A displays a "Search Setting History" dialog box 201 on the screen of the display unit 106 shown in Fig. 39 to accept the input of a target time period (S1901). As shown in Fig. 39, the "Search Setting History" dialog box 201 includes a time period input field 203, an "OK" button 205, and a "Cancel" button 207. By inputting the start date and end date of the target time period by typing them in month/day/year format and then pressing the "OK" button 205, the user can designate the target time period.

Then, the PC 1A executes a loop process of steps S1905 to S1909 (S1903). In this loop process, the PC 1A reads creation date information (e.g. a time stamp) for all of the setting history files in the PC 1A. Next, the PC 1A judges whether the creation date of a targeted history file (currently targeted for this loop process) is within the target time period designated in step S1901. If the creation date of the targeted history file is within the target time period (S1907:TRUE), the targeted setting history file is added in a history file list (S1909). If the creation date of the target history file is not within the target time period (S1907:FALSE), the step S 1909 is skipped. By repeating the loop process of steps S 1905 to S1909, all of the setting history files having the creation date within the target time period are added in the history file list.

Next, the PC 1A judges whether the history file list created in the loop process of steps S1905 to S 1909 is empty (S 1911). If the history file list is empty (S1911:FALSE), the recovering process terminates. If the history file list is not empty (S1911:TRUE), control proceeds to step S1913. In step S1913, the PC 1A displays a "Search Result" dialog box 211, which is shown in Fig. 40, to represent a list of setting history files included in the history file list. As shown in Fig. 40, the "Search Result" dialog box 211 includes a information display field 213, a "Remove" button 215, a "Recover" button 217, and a "Cancel" button 219.

In the information display field 213, various types of information including a date, a node name, an IP address, a device type, a location are displayed in a "Date" field, a "Name" field, an "Address" field, a "Printer Type" field, and a "Location" field, respectively, for each of the setting history files in the history file list. By displaying the "Search Result" dialog box 211, the user is allowed to know, for each of the setting history files in the history file list, information on when the setting history file is created and which device the setting history file corresponds to.

After the user checks the information provided by the "Search Result" dialog box 211, the user decides, for each of devices listed the information display field 213, whether the device should be subjected to the recovering process (S1915). That is, the user selects devices, which needs the recovering of settings, from devices displayed in the information display field 213. If the user finds devices not to be subjected to the recovering process, the user is allowed to delete such devices from the targets of the recovering process by clicking such a device first, and then pressing the "Remove" button 215.

To start the recovering process for the device listed in the information display field 213, the user presses the "Recover" button 217. By pressing the "Cancel" button 219, the initiation of the recovering process can be cancelled.

Next, the PC 1A repeats a loop process of steps S 1919 to S1923. In this loop process, setting values are read from a targeted setting history file currently targeted for this loop process (S1919), and then the setting values are transmitted to a device corresponding to the targeted setting history file (S1921). After the data transmission is finished, the PC 1A deletes the targeted setting history file (S 1923). After the loop process of steps S 1919 to S 1923 is executed for all of the devices to be targeted for the recovering process, the recovering process terminates.

Similarly to the first through sixth example, in cases where a trouble arises in a device after the updating of settings is executed, a user can restore settings of the device to a previous state by selecting the device and staring the recovering process for the selected device.

In addition, according to the seventh example, devices for which the update of settings is executed within the target time period designated by the user are detected automatically by the PC 1A, and such detected devices are added to the history file list. Therefore, according to the seventh example, devices having a possibility of causing the same problem as that of a user selected device (a device originally targeted for the recovering process) are included in the history file list. Therefore, the user can prevent the problem, which will be caused in devices other than the user selected device, before they happen.

EIGHTH EXAMPLE

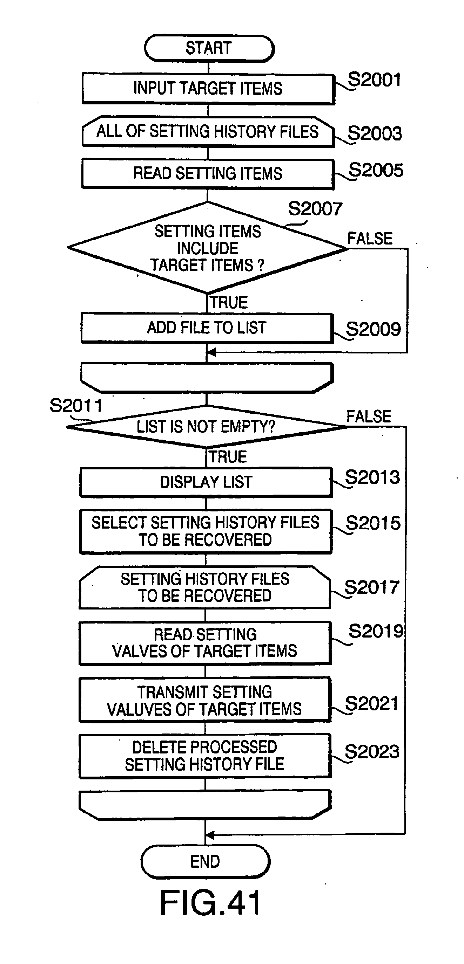

Hereafter, a recovering process according to an eighth example is explained. Fig. 41 is a flowchart illustrating the recovering process according to the eighth example. Since the initiating manner of the recovering process and an internal structure of a setting history file are substantially the same as those of one of the above mentioned examples, explanations thereof will not be repeated.

As shown in Fig. 41, firstly, the PC 1A accepts the input of target setting items to be targeted for the recovering process (S2001). In the process of step S2001, the user is allowed to designate the target setting items. Samples of setting items are illustrated in Figs. 18 and 19.

Next, the PC 1A repeats a loop process of steps S2005 to S2009 for all of setting history files stored in the PC 1A. In this loop process, the PC 1A reads setting items from a targeted setting history file currently targeted for the loop process (S2005). Then, the PC 1A judges whether the setting items of the targeted setting history file include the target setting items designated by the user in step S2001 (S2007). If the setting items of the targeted setting history file include the target setting items (S2007:TRUE), the targeted setting history file is added to a history file list (S2009). If the setting items of the targeted setting history file do not include the target setting items (S2007:FALSE), the step of S2009 is skipped.

By repeating the loop process of steps S2005 to S2009, setting history files, each of which has setting items including the target setting items designated by the user, are listed.

Next, the PC 1A judges whether the history file list created in the loop process of steps S2005 to S2009 is empty (S2011). If the history file list is empty (S2011:FALSE), the recovering process terminates. If the history file list is not empty (S2011:TRUE), control proceeds to step S2013. In step S2013, the PC 1A displays a list of setting history files included in the history file list. For example, in step S2013, information may be displayed on a dialog box similar to the "Search Result" dialog box 211.

Similarly to the step S 1915 of the seventh example, after checking the information provided in step S2013, the user decides, for each of the devices listed in the information display field 213, whether the device should be subjected to the recovering process (S2015). That is, the user selects devices, which needs the recovering of settings, from devices displayed on the information display field 213.

Next, the PC 1A repeats a loop process of steps S2019 to S2023, for each of the devices included in the history file list (S2017). In the loop process, the PC 1A reads setting values of the target setting items from a targeted setting history file currently targeted for the loop process of steps S2019 to S2023 (S2019). Then, the PC 1A transmits the setting values of the target setting items to a device corresponding to the targeted setting history file (S2021). After the data transmission is finished, the PC 1A deletes the targeted setting history file (S2023). After the loop process is executed for all of the setting history files included in the history file list, the recovering process terminates.

Similarly to the first through seventh example, in cases where a trouble arises in a device after the setting data update is executed, a user can restore settings of the device to a previous state by selecting the device and staring the recovering process for the selected device.

In addition, according to the eighth example, devices, which have been subjected to the update of settings with regard to target setting items designated by the user, are automatically searched by the PC 1A. Therefore, if there is a possibility that devices which have been subjected to the update of settings with regard to particular setting items cause a problem, such a problem which will be also caused in some devices by the particular setting items can be solved by the recovering process according to the eighth example even if the user can not specify such devices having a possibility of causing a problem.

Since only setting values of setting items designated by the user at step S2001 are transmitted to a device, the data transmission speed is enhanced in comparison with the case where all of the setting items in a setting history file are transmitted to a device. It is prevented that setting items which do not need to be subjected to the recovering process are restored to a previous state. However, it is also possible to transmit all of the setting items in a setting history file to a device as in the case of the seventh example.

The recovering process may be configured such that the user can select one of a process in which only setting values of target setting items designated by the user at step S2001 are transmitted to a device, and a process in which all of the setting values of setting items included in a setting history file are transmitted to a device.

Although the present invention has been described in considerable detail with reference to certain preferred embodiments thereof, other embodiments are possible.

In the above mentioned embodiment, if it is not necessary to transmit setting values to the representative device, a user is required to use the "Remove" button to remove the representative device from targets for the data setting transmission process because in the above mentioned embodiment the representative device is typically included in the targets for the data setting transmission process.

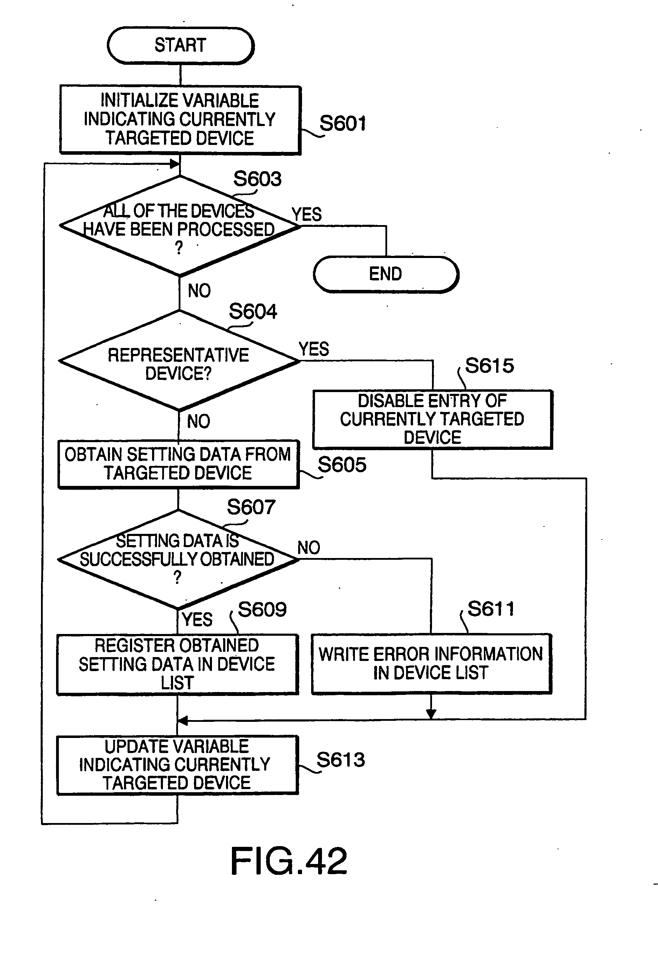

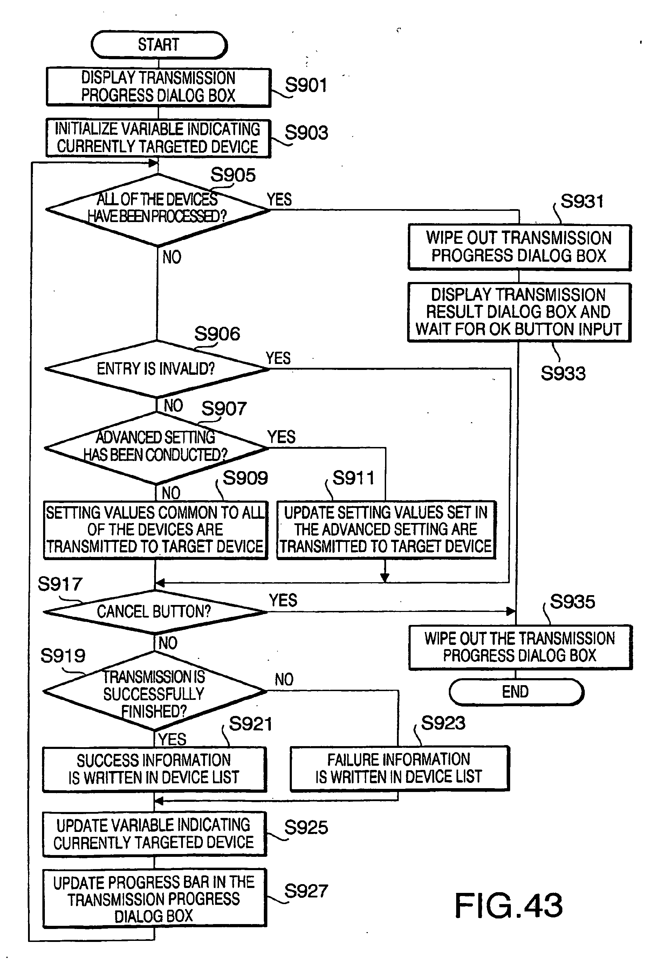

However, the data setting transmission process may be configured such that the representative device is excluded in advance from the targets for the data setting transmission process. Such a configuration for excluding the current device form the targets for the data setting transmission process is attained by a configuration shown in Figs. 42 and 43. Fig. 42 is a variation of the device setting acquisition process shown in Fig. 15. Fig. 43 is a variation of the setting data package transmission process of Fig. 22. In the variation shown in Fig. 42, steps S604 and S615 are added to the device setting acquisition process of Fig. 15.

In the process shown in Fig. 42, if it is judged that all of the devices have not been processed (S603:NO), the PC 1A judges whether the target device (the i-th device) is the representative device (S604). If it is judged in step S604 that the target device is the representative device (S604:YES), control proceeds to step S615. In step S615, the PC 1A disables an entry corresponding to the representative device in the device list so that steps S605 to S611 are not executed for the representative device. That is, the entry of the representative device is designated as an invalid entry. After the step S615 is finished, control proceeds to step S613. If it is judged in step S604 that the target device is not the representative device (S604:NO), control proceeds to step S605.

In the variation shown in Fig. 43, step S906 is added to the process of Fig. 22 and steps S913 and S915 are omitted from the process of Fig. 22. According to the variation shown in Fig. 43, if it is judged in step S905 that all of the devices have not been processed (S905:NO), the PC 1A judges whether a entry corresponding to the target device in the device list is invalid or not. If it is judged in step S906 that the entry is invalid (S906:YES), control proceeds to step S917 without executing the steps 907 to S911.

Consequently, acquisition of setting data from the target device, transmission of new setting data or setting data set by the advanced setting are skipped for the representative device.

Although in the above mentioned embodiment the data setting transmission process is targeted for printing devices such as a printer, the embodiment can be also applied to various types of devices, for example, a scanner, an image obtaining device (such as a network camera), an image communication device (such as a facsimile device), a communication routing device (such as a network point), an information sever device (such as a network storage), which are typically used in such a situation that setting values are substantially common to a plurality of devices.

In the above mentioned embodiment only the PC 1A contributes to the data setting transmission process. That is, only the PC 1A functions as a setting data transmitting device. However, setting data transmission function may be distributed over a plurality of nodes. If such a distributed system is configured such that output data of a functional block implemented in one node is used as input data to be inputted to a functional block implemented in another node, the distributed system is implemented as a network system that also functions similarly to the data transmission device. For example, such a distributed system on a network may be implemented by use of a plurality of PCs 1A, 1B and 1C.

Although in the above mentioned embodiment the setting data to be transmitted to the target devices in the device list are prepared by obtaining the current setting data currently set to the representative device, such setting data to be transmitted to the target devices may be inputted manually by a user. Alternatively or additionally, samples of setting data to be transmitted to the target devices may be prepared in advance in the PC 1A (1B or 1C), and one of the samples may be selected as the setting data to be transmitted to the target devices.

Alternatively, a management server having the function of obtaining current setting data currently set to the target devices in the device list from the target devices through the network may be connected to the network. In this case, the current setting data of the target devices is obtained from the management server without directly accessing the target devices.

## Claims

1.   A method of transmitting setting data from a terminal device (1A, 1B, I C) to a plurality of target devices (3, 4, 5), comprising the steps of:

   at the terminal device (1A, 1B, 1C), preparing new setting data, the new setting data to be set for the plurality of target devices (3, 4, 5);
   at the terminal device (1A, 1B, 1C), obtaining from the plurality of target devices (3, 4, 5) respective current setting data currently set for the plurality of target devices (3, 4, 5); and
   at the terminal device (1A, 1B, 1C), transmitting the new setting data to the plurality of target devices (3, 4, 5);
   **characterized by**:

at the terminal device (1A, 1B, 1C), storing the respective current setting data obtained from the plurality of target devices (3, 4, 5) in a memory device (107) as backup data;
transmitting the new setting data to the plurality of target devices (3, 4, 5) after the storing of the current setting data is finished;
at the terminal device (1A, 1B, 1C), selecting one of the plurality of target devices (3, 4, 5) as a recovery target device (3, 4, 5); and
starting restoring settings of the recovery target device (3, 4, 5) to a previous state of the recovery target device (3, 4, 5) by, at the terminal device (1A, 1B, I C), transmitting the backup data of the recovery target device (3, 4, 5) to the recovery target device (3, 4, 5).

2. The method according to claim 1, wherein the step of the storing the current setting data stores a plurality of pieces of backup data respectively corresponding to the step of obtaining the current setting data.

3. The method according to claim 2, further comprising the step of restoring settings of a recovery target device (3, 4, 5) of the plurality of target devices (3, 4, 5) to a previous state by transmitting one of the plurality of pieces of backup data selected by a user to the recovery target device (3, 4, 5).

4. The method according to claim 2, further comprising the step of allowing a user to start restoring settings of a recovery target device (3, 4, 5) of the plurality of target devices (3, 4, 5) to a previous state by transmitting a latest one of the plurality of pieces of back up data for the recovery target device (3, 4, 5) to the recovery target device (3, 4, 5).

5. The method according to claim 1, further comprising the step of displaying the current setting data of the recover target device (3, 4, 5) before the step of the allowing the user to start restoring settings of the recovery target device (3, 4, 5) is executed.

6. The method according to claim 1, wherein:

each of a plurality of pieces of current setting data includes setting values of a plurality of setting items;
the method further comprising the step of allowing the user to select at least one item from among the plurality of setting items to be targeted for the restoring settings of the recovery target device (3, 4, 5); and
the step of the restoring settings of the recovery target device (3, 4, 5) is executed with regard to the at least one items selected by the user.

7. The method according to any of claims 1 to 6, wherein:

each of a plurality of pieces of current setting data includes setting values of a plurality of setting items;
the method further comprising the steps of comparing the new setting data with each of the plurality of pieces of current setting data before the step of the storing the plurality of pieces of current setting data is executed so as to detect a setting item of the new setting data to be updated with respect to each of the plurality of pieces of current setting data; and
the step of the storing the current setting data is storing the updated setting item in a memory device (107) as backup data.

8. The method according to any of claims 1 to 7, further comprising the steps of:

specifying a point of time;
identifying backup data stored at the specified point of time; and
restoring settings of a recovery target device (3, 4, 5) using the identified backup data.

9. The method according to claim 8, wherein in the specifying step the point of time is specified based on user designation.

10. The method according to claim 8, wherein in the specifying step the point of time is specified within a range of time designated by a user.

11. The method according to claim 8, wherein in the specifying step the point of time is specified as a time when backup data designated by a use is created.

**12.** The method according to claim 2, 3 or 4, further comprising the steps of:

allowing the user to designate at least one setting item;
selecting at least one backup data containing the at least one setting item designated by the user from among the plurality of pieces of backup data;
displaying the plurality of pieces of backup data;
allowing the user to select at least one backup data; and
restoring settings of at least one device corresponding to the selected backup data.

**13.** The method according to any of claims 1 to 12, further comprising the steps of:

displaying the plurality of pieces of backup data;
allowing the user to select at least one backup data; and
restoring settings of at least one device corresponding to the selected backup data.

**14.** The method according to any of claims 1 to 13, wherein the step of the preparing the new setting data comprises the steps of:

allowing the user to select a representative device from among a plurality of devices; and
obtaining representative setting data currently set to the representative device,
wherein one of the representative setting data and modified setting data made by modifying the representative setting data is used as the new setting data.

**15.** The method according to claim 1, wherein:

the step of preparing includes preparing a plurality of pieces of new setting data to be set to the plurality of target devices (3, 4, 5), respectively;
the step of obtaining includes obtaining a plurality of pieces of current setting data currently set to the plurality of target devices (3, 4, 5) respectively;
the step of storing includes storing the plurality of pieces of current setting data obtained from the plurality of target devices (3, 4, 5) in a memory device (107); and
the step of transmitting includes transmitting the plurality of pieces of new setting data to the plurality of target devices (3, 4, 5), respectively, after the storing of the current setting data is finished.

**16.** A computer program product for use on a computer, the computer program product comprising a computer program for carrying out the method of transmitting setting data of any preceding claim when said computer program is run on a computer.

**17.** A computer program for use on a computer, the computer program being arranged to carry out the method of transmitting setting data of any one of claims 1 to 15 when said computer program is run on a computer.

**18.** A terminal device (1A, 1B, 1C) for transmitting setting data to a plurality of target devices (3, 4, 5), comprising:

a preparing system for preparing new setting data, the new setting data to be set to the plurality of target devices (3, 4, 5);
an obtaining system arranged to obtain from the plurality of target devices (3, 4, 5) a plurality of pieces of current setting data currently set for the plurality of target devices (3, 4, 5), respectively; and
a transmitting system arranged to transmit the new setting data to the plurality of target devices (3, 4, 5); **characterized by**:

a storing system arranged to store the plurality of pieces of current setting data obtained from the plurality of target devices (3, 4, 5) in a memory device (107); wherein
the transmitting system is arranged to transmit the new setting data to the plurality of target devices (3, 4, 5) after the storing of the current setting data is finished;
the terminal device (1A, I B, I C) is arranged to select one of the plurality of target devices (3, 4, 5) as a recovery target device (3, 4, 5); and
the transmitting system is arranged to transmit to the recovery target device (3, 4, 5) the backup data of the recovery target device (3, 4, 5) so as to allow a user to start restoring settings of the recovery target device (3, 4, 5) to a previous state.

**19.** The terminal device according to claim 18, further comprising a restoring system that restores settings of a recovery target device of the plurality of target devices to a previous state by transmitting one current setting data of the plurality of pieces of current setting data stored by the step of the storing to the recovery target device (3, 4, 5), wherein the one current setting data is data obtained from the recovery target device (3, 4, 5) in the step of the obtaining.

**20.** A system for transmitting setting data to a plurality of target devices, including a terminal device according to claim 18 or 19.

**Patentansprüche**

**1.** Verfahren zum Übertragen von Einstelldaten von einem Terminalgerät (1A, 1B, 1C) zu vielen Zielgeräten (3, 4, 5), mit den folgenden Schritten:

in dem Terminalgerät (1A, 1B, 1C) werden neue Einstelldaten vorbereitet, wobei die neuen Einstelldaten für die vielen Zielgeräte (3, 4, 5) einzustellen sind;
in dem Terminalgerät (1A, 1B, 1C) werden von den vielen Zielgeräten (3, 4, 5) entsprechende, gegenwärtige Einstelldaten erhalten, die gegenwärtig für die vielen Zielgeräte (3, 4, 5) eingestellt sind; und
in dem Terminalgerät (1A, 1B, 1C) werden die neuen Einstelldaten zu den vielen Zielgeräten (3, 4, 5) übertragen, **gekennzeichnet durch:**

in dem Terminalgerät (1A, 1B, 1C) werden die entsprechenden, gegenwärtigen Einstelldaten, die von den vielen Zielgeräten (3, 4, 5) erhalten werden, in einem Speichergerät (107) als Backupdaten gespeichert;
die neuen Einstelldaten werden zu den vielen Zielgeräten (3, 4, 5) übertragen, nachdem das Speichern der gegenwärtigen Einstelldaten beendet wurde;
in dem Terminalgerät (1A, 1B, 1C) wird eines der vielen Zielgeräte (3, 4, 5) als ein Wiederherstellungs-Zielgerät (3, 4, 5) ausgewählt; und
in dem Terminalgerät (1A, 1B, 1C) wird das Wiederherstellen der Einstellungen des Wiederherstellungs-Zielgerätes (3, 4, 5) auf einen vorherigen Zustand des Wiederherstellungs-Zielgerätes (3, 4, 5) gestartet, wobei die Backupdaten des Wiederherstellungs-Zielgerätes (3, 4, 5) zu dem Wiederherstellungs-Zielgerät (3, 4, 5) übertragen werden.

**2.** Verfahren gemäß Anspruch 1, wobei der Schritt zum Speichern der gegenwärtigen Einstelldaten viele Teile von Backupdaten speichert, was jeweils dem Schritt zum Erhalten der gegenwärtigen Einstelldaten entspricht.

**3.** Verfahren gemäß Anspruch 2, des weiteren mit einem Schritt zum Wiederherstellen von Einstellungen eines Wiederherstellungs-Zielgerätes (3, 4, 5) der vielen Zielgeräte (3, 4, 5) auf einen vorherigen Zustand durch Übertragen von einem der vielen Teile der Backupdaten, der durch einen Benutzer für das Wiederherstellungs-Zielgerät (3, 4, 5) ausgewählt wird.

**4.** Verfahren gemäß Anspruch 2, des weiteren mit einem Schritt, der es einem Benutzer ermöglicht, ein Wiederherstellen von Einstellungen eines Wiederherstellungs-Zielgerätes (3, 4, 5) der vielen Zielgeräte (3, 4, 5) auf einen vorherigen Zustand zu starten, indem der letzte Teil der vielen Backupdaten für das Wiederherstellungs-Zielgerät (3, 4, 5) zu dem Wiederherstellungs-Zielgerät (3, 4, 5) übertragen wird.

**5.** Verfahren gemäß Anspruch 1, des weiteren mit einem Schritt zum Anzeigen der gegenwärtigen Einstelldaten des Wiederherstellungs-Zielgerätes (3, 4, 5), bevor der Schritt ausgeführt wird, der es dem Benutzer ermöglicht, das Wiederherstellen der Einstellungen des Wiederherstellungs-Zielgerätes (3, 4, 5) zu starten.

**6.** Verfahren gemäß Anspruch 1, wobei:

jeder der vielen Teile der gegenwärtigen Einstelldaten Einstellwerte von vielen Einstellungseinträgen aufweist;
das Verfahren des weiteren einen Schritt aufweist, der es dem Benutzer ermöglicht, zumindest einen Eintrag von den vielen Einstellungseinträgen auszuwählen, der für die Wiederherstellungseinstellungen des Wiederherstellungs-Zielgerätes (3, 4, 5) bestimmt ist; und

der Schritt zum Wiederherstellen der Einstellungen des Wiederherstellungs-Zielgerätes (3, 4, 5) hinsichtlich des zumindest einen Eintrags ausgeführt wird, der durch den Benutzer ausgewählt wird.

**7.** Verfahren gemäß einem der Ansprüche 1 bis 6, wobei:

jeder der vielen Teile der gegenwärtigen Einstelldaten Einstellwerte von vielen Einstellungseinträgen aufweist; das Verfahren des weiteren Schritte zum Vergleichen der neuen Einstelldaten mit jedem der vielen Teile der gegenwärtigen Einstelldaten aufweist, bevor der Schritt zum Speichern der vielen Teile der gegenwärtigen Einstelldaten ausgeführt wird, um so einen Einstellungseintrag der neuen Einstelldaten zu erfassen, der hinsichtlich jedes Teils der vielen, gegenwärtigen Einstelldaten zu aktualisieren ist; und der Schritt zum Speichern der gegenwärtigen Einstelldaten ein Speichern des aktualisierten Einstellungseintrags in einem Speichergerät (107) als Backupdaten ist.

**8.** Verfahren gemäß einem der Ansprüche 1 bis 7, des weiteren mit folgenden Schritten:

Spezifizieren eines Zeitpunktes; Identifizieren von Backupdaten, die an dem spezifizierten Zeitpunkt gespeichert werden; und Rückspeichern von Einstellungen eines Wiederherstellungs-Zielgerätes (3, 4, 5) unter Verwendung der identifizierten Backupdaten.

**9.** Verfahren gemäß Anspruch 8, wobei bei dem Schritt zum Spezifizieren der Zeitpunkt auf der Grundlage einer Bezeichnung eines Benutzers spezifiziert wird.

**10.** Verfahren gemäß Anspruch 8, wobei bei dem Schritt zum Spezifizieren der Zeitpunkt innerhalb eines Zeitbereiches spezifiziert wird, der durch einen Benutzer bezeichnet wird.

**11.** Verfahren gemäß Anspruch 8, wobei bei dem Schritt zum Spezifizieren der Zeitpunkt als ein Zeitpunkt spezifiziert wird, bei dem die Backupdaten erzeugt werden, die durch einen Benutzer bezeichnet werden.

**12.** Verfahren gemäß Anspruch 2, 3 oder 4, des weiteren mit den folgenden Schritten:

Ermöglichen, dass der Benutzer zumindest einen Einstellungseintrag bezeichnet; Auswählen von zumindest einem Backupdatum, das den zumindest einen Einstellungseintrag enthält, der durch den Benutzer bezeichnet wird, von den vielen Teilen der Backupdaten; Anzeigen der vielen Teile der Backupdaten; Ermöglichen, dass der Benutzer zumindest ein Backupdatum auswählt; und Wiederherstellen der Einstellungen von zumindest einem Gerät entsprechend den ausgewählten Backupdaten.

**13.** Verfahren gemäß einem der Ansprüche 1 bis 12, des weiteren mit den folgenden Schritten:

Anzeigen der vielen Teile der Backupdaten; Ermöglichen, dass der Benutzer zumindest ein Backupdatum auswählt; und Wiederherstellen der Einstellungen von zumindest einem Gerät entsprechend den ausgewählten Backupdaten.

**14.** Verfahren gemäß einem der Ansprüche 1 bis 13, wobei der Schritt zum Vorbereiten der neuen Einstelldaten die folgenden Schritte aufweist:

Ermöglichen, dass der Benutzer ein repräsentatives Gerät von den vielen Geräten auswählt; und Erhalten von repräsentativen Einstelldaten, die für das repräsentative Gerät gegenwärtig eingestellt sind, wobei entweder die repräsentativen Einstelldaten oder abgewandelte Einstelldaten, die durch Abwandeln der repräsentativen Einstelldaten geschaffen werden, als die neuen Einstelldaten verwendet werden.

**15.** Verfahren gemäß Anspruch 1, wobei:

der Vorbereitungsschritt ein Vorbereiten von vielen Teilen der neuen Einstelldaten beinhaltet, die jeweils für die vielen Zielgeräte (3, 4, 5) einzustellen sind; der Erhaltungsschritt ein Erhalten von vielen Teilen der gegenwärtigen Einstelldaten beinhaltet, die jeweils gegenwärtig für die vielen Zielgeräte (3, 4, 5) eingestellt werden;

der Speicherschritt ein Speichern der vielen Teile der gegenwärtigen Einstelldaten in einem Speichergerät (107) beinhaltet, die von den vielen Zielgeräten (3, 4, 5) erhalten werden; und

der Übertragungsschritt jeweils ein Übertragen der vielen Teile der neuen Einstelldaten zu den vielen Zielgeräten (3, 4, 5) beinhaltet, nachdem das Speichern der gegenwärtigen Einstelldaten beendet wurde.

16. Computerprogrammerzeugnis zur Verwendung bei einem Computer, wobei das Computerprogrammerzeugnis ein Computerprogramm zum Durchführen des Verfahrens zum Übertragen von Einstelldaten gemäß einem der vorherigen Ansprüche beinhaltet, wenn das Computerprogramm auf einem Computer läuft.

17. Computerprogramm zur Verwendung bei einem Computer, wobei das Computerprogramm zum Durchführen des Verfahrens zum Übertragen von Einstelldaten gemäß einem der Ansprüche 1 bis 15 eingerichtet ist, wenn das Computerprogramm auf einem Computer läuft.

18. Terminalgerät (1A, 1B, 1C) zum Übertragen von Einstelldaten zu vielen Zielgeräten (3, 4, 5), mit:

einem Vorbereitungssystem zum Vorbereiten von neuen Einstelldaten, wobei die neuen Einstelldaten für die vielen Zielgeräte (3, 4, 5) einzustellen sind;
einem Erhaltungssystem, das eingerichtet ist, um von den vielen Zielgeräten (3, 4, 5) viele Teile von gegenwärtigen Einstelldaten zu erhalten, die jeweils gegenwärtig für die vielen Zielgeräte (3, 4, 5) eingestellt sind; und
einem Übertragungssystem, das zum Übertragen der neuen Einstelldaten zu den vielen Zielgeräten (3, 4, 5) eingerichtet ist, **gekennzeichnet durch**:

einem Speichersystem, das zum Speichern der vielen Teile der gegenwärtigen Einstelldaten, die von den vielen Zielgeräten (3, 4, 5) erhalten werden, in einem Speichergerät (107) eingerichtet ist; wobei
das Übertragungssystem zum Übertragen der neuen Einstelldaten zu den vielen Zielgeräten (3, 4, 5) eingerichtet ist, nachdem das Speichern der gegenwärtigen Einstelldaten beendet wurde;
das Terminalgerät (1A, 1B, 1C) zum Auswählen von einem der vielen Zielgeräte (3, 4, 5) als ein Wiederherstellungs-Zielgerät (3, 4, 5) eingerichtet ist; und
das Übertragungssystem eingerichtet ist, zu dem Wiederherstellungs-Zielgerät (3, 4, 5) die Backupdaten des Wiederherstellungs-Zielgeräts (3, 4, 5) zu übertragen, um so einem Benutzer zu ermöglichen, ein Wiederherstellen von Einstellungen des Wiederherstellungs-Zielgerätes (3, 4, 5) auf einen vorherigen Zustand zu starten.

19. Terminalgerät gemäß Anspruch 18, des weiteren mit einem Wiederherstellungssystem, das Einstellungen eines Wiederherstellungs-Zielgerätes der vielen Zielgeräte auf einen vorherigen Zustand wiederherstellt, indem ein gegenwärtiges Einstelldatum der vielen Teile der gegenwärtigen Einstelldaten, die durch den Speicherschritt gespeichert sind, zu dem Wiederherstellungs-Zielgerät (3, 4, 5) _übertragen wird, wobei das eine gegenwärtige Einstelldatum Daten sind, die von dem Wiederherstellungs-Zielgerät (3, 4, 5) bei dem Erhaltungsschritt erhalten werden.

20. System zum Übertragen von Einstelldaten zu vielen Zielgeräten einschließlich eines Terminalgeräts gemäß Anspruch 18 oder 19.

## Revendications

1. Procédé de transmission de données de configuration à partir d'un dispositif terminal (1A, 1B, 1C) vers une pluralité de dispositifs cibles (3, 4, 5), comprenant les étapes consistant à :

au niveau du dispositif terminal (1A, 1B, 1C), préparer de nouvelles données de configuration, les nouvelles données de configuration devant être configurées pour la pluralité de dispositifs cibles (3, 4, 5) ;
au niveau du dispositif terminal (1A, 1B, 1C), obtenir à partir de la pluralité de dispositifs cibles (3, 4, 5) les données de configuration actuelles respectives actuellement configurées pour la pluralité de dispositifs cibles (3, 4, 5) ; et
au niveau du dispositif terminal (1A, 1B, 1C), transmettre les nouvelles données de configuration à la pluralité de dispositifs cibles (3, 4, 5) ; **caractérisé par** le fait de :

au niveau du dispositif terminal (1A, 1B, 1C), stocker les données de configuration actuelles respectives obtenues à partir de la pluralité de dispositifs cibles (3, 4, 5), dans un dispositif mémoire (107) en tant que

26

données de sauvegarde ;
transmettre les nouvelles données de configuration à la pluralité de dispositifs cibles (3, 4, 5) une fois que le stockage des données de configuration actuelles a pris fin ;
au niveau du dispositif terminal (1A, 1B, 1C), sélectionner un dispositif de la pluralité de dispositifs cibles (3, 4, 5) en tant que dispositif cible de restauration (3, 4, 5) ; et
démarrer la restauration des configurations du dispositif cible de restauration (3, 4, 5) à un état précédent du dispositif cible de restauration (3, 4, 5) en transmettant, au niveau du dispositif terminal (1A, 1B, 1C), les données de sauvegarde du dispositif cible de restauration (3, 4, 5) au dispositif cible de restauration (3, 4, 5).

2. Procédé selon la revendication 1, dans lequel l'étape consistant à stocker les données de configuration actuelles, stocke une pluralité d'éléments de données de sauvegarde correspondant respectivement à l'étape consistant à obtenir les données de configuration actuelles.

3. Procédé selon la revendication 2, comprenant en outre l'étape consistant à restaurer les configurations d'un dispositif cible de restauration (3, 4, 5) de la pluralité de dispositifs cibles (3, 4, 5) à un état précédent en transmettant un élément de la pluralité d'éléments de données de sauvegarde sélectionné par un utilisateur, au dispositif cible de restauration (3, 4, 5).

4. Procédé selon la revendication 2, comprenant en outre l'étape consistant à permettre à un utilisateur de démarrer une restauration des configurations d'un dispositif cible de restauration (3, 4, 5) de la pluralité de dispositifs cibles (3, 4, 5) à un état précédent en transmettant le dernier élément de la pluralité d'éléments de données de sauvegarde du dispositif cible de restauration (3, 4, 5), au dispositif cible de restauration (3, 4, 5).

5. Procédé selon la revendication 1, comprenant en outre l'étape consistant à afficher les données de configuration actuelles du dispositif cible de restauration (3, 4, 5) avant que l'étape consistant à permettre à l'utilisateur de démarrer une restauration des configurations du dispositif cible de restauration (3, 4, 5), ne soit exécutée.

6. Procédé selon la revendication 1, dans lequel :

chaque élément d'une pluralité d'éléments de données de configuration actuelles, inclut des valeurs de configuration d'une pluralité d'éléments de configuration ;
le procédé comprenant en outre l'étape consistant à permettre à l'utilisateur de sélectionner au moins un élément de la pluralité d'éléments de configuration à cibler pour les configurations de restauration du dispositif cible de restauration (3, 4, 5) ; et
l'étape de restauration des configurations du dispositif cible de restauration (3, 4, 5) est exécutée en ce qui concerne le au moins un élément sélectionné par l'utilisateur.

7. Procédé selon l'une quelconque des revendications 1 à 6, dans lequel :

chaque élément d'une pluralité d'éléments de données de configuration actuelles inclut des valeurs de configuration d'une pluralité d'éléments de configuration ;
le procédé comprenant en outre les étapes consistant à comparer les nouvelles données de configuration à chaque élément de la pluralité d'éléments de données de configuration actuelles avant que l'étape consistant à stocker la pluralité d'éléments de données de configuration actuelles ne soit exécutée de manière à détecter un élément de configuration des nouvelles données de configuration à mettre à jour en ce qui concerne chaque élément de la pluralité d'éléments de données de configuration actuelles ; et
l'étape consistant à stocker les données de configuration actuelles stocke l'élément de configuration mis à jour dans un dispositif mémoire (107) en tant que données de sauvegarde.

8. Procédé selon l'une quelconque des revendications 1 à 7, comprenant en outre les étapes consistant à :

spécifier un instant ;
identifier les données de sauvegarde stockées à l'instant spécifié ; et
restaurer les configurations d'un dispositif cible de restauration (3, 4, 5) en utilisant les données de sauvegarde identifiées.

9. Procédé selon la revendication 8, dans lequel, à l'étape de spécification, l'instant est spécifié sur la base d'une indication d'un utilisateur.

10. Procédé selon la revendication 8, dans lequel, à l'étape de spécification, l'instant est spécifié dans une plage temporelle indiquée par un utilisateur.

11. Procédé selon la revendication 8, dans lequel, à l'étape de spécification, l'instant est spécifié comme un instant où les données de sauvegarde indiquées par un utilisateur sont créées.

12. Procédé selon la revendication 2, 3 ou 4, comprenant en outre les étapes consistant à :

permettre à l'utilisateur d'indiquer au moins un élément de configuration ;
sélectionner au moins une donnée de sauvegarde qui contient le au moins un élément de configuration indiqué par l'utilisateur parmi la pluralité d'éléments de données de sauvegarde ;
afficher la pluralité d'éléments de données de sauvegarde ;
permettre à l'utilisateur de sélectionner au moins une donnée de sauvegarde ; et
restaurer les configurations d'au moins un dispositif correspondant aux données de sauvegarde sélectionnées.

13. Procédé selon l'une quelconque des revendications 1 à 12, comprenant en outre les étapes consistant à :

afficher la pluralité d'éléments de données de sauvegarde ;
permettre à l'utilisateur de sélectionner au moins une donnée de sauvegarde ; et
restaurer les configurations d'au moins un dispositif correspondant aux données de sauvegarde sélectionnées.

14. Procédé selon l'une quelconque des revendications 1 à 13, dans lequel l'étape consistant à préparer les nouvelles données de configuration comprend les étapes consistant à :

permettre à l'utilisateur de sélectionner un dispositif représentatif parmi une pluralité de dispositifs ; et
obtenir des données de configuration représentatives actuellement configurées pour le dispositif représentatif, dans lequel l'une des données de configuration représentatives et des données de configuration modifiées obtenues en modifiant les données de configuration représentatives sont utilisées comme nouvelles données de configuration.

15. Procédé selon la revendication 1, dans lequel :

l'étape de préparation inclut la préparation d'une pluralité d'éléments de nouvelles données de configuration destinées à configurer la pluralité de dispositifs cibles (3, 4, 5), respectivement ;
l'étape d'obtention inclut l'obtention d'une pluralité d'éléments de données de configuration actuelles actuellement configurées pour la pluralité de dispositifs cibles (3, 4, 5), respectivement ;
l'étape de stockage inclut le stockage de la pluralité d'éléments de données de configuration actuelles obtenues à partir de la pluralité de dispositifs cibles (3, 4, 5), dans un dispositif mémoire (107) ; et
l'étape de transmission inclut la transmission de la pluralité d'éléments de nouvelles données de configuration à la pluralité de dispositifs cibles (3, 4, 5), respectivement, une fois que le stockage des données de configuration actuelles a pris fin.

16. Produit de programme informatique destiné à être utilisé par un ordinateur, le produit de programme informatique comprenant un programme informatique destiné à exécuter le procédé de transmission de données de configuration selon l'une quelconque des revendications précédentes, lorsque ledit programme informatique est exécuté par un ordinateur.

17. Programme informatique destiné à être utilisé par un ordinateur, le programme informatique étant agencé de manière à exécuter le procédé de transmission de données de configuration selon l'une quelconque des revendications 1 à 15 lorsque ledit programme informatique est exécuté par un ordinateur.

18. Dispositif terminal (1A, 1B, 1C), destiné à transmettre des données de configuration à une pluralité de dispositifs cibles (3, 4, 5), comprenant ;
un système de préparation pour préparer de nouvelles données de configuration, les nouvelles données de configuration étant destinées à configurer la pluralité de dispositifs cibles (3, 4, 5) ;
un système d'obtention agencé de manière à obtenir à partir de la pluralité de dispositifs cibles (3, 4, 5) une pluralité d'éléments de données de configuration actuelles actuellement configurées pour la pluralité de dispositifs cibles (3, 4, 5), respectivement ; et

un système de transmission agencé de manière à transmettre les nouvelles données de configuration à la pluralité de dispositifs cibles (3, 4, 5) ; **caractérisé par** :

un système de stockage agencé de manière à stocker la pluralité d'éléments de données de configuration actuelles obtenues à partir de la pluralité de dispositifs cibles (3, 4, 5), dans un dispositif mémoire (107) ; dans lequel

le système de transmission est agencé de manière à transmettre les nouvelles données de configuration à la pluralité de dispositifs cibles (3, 4, 5) une fois que le stockage des données de configuration actuelles a pris fin ;

le dispositif terminal (1A, 1B, 1C) est agencé de manière à sélectionner un dispositif de la pluralité de dispositifs cibles (3, 4, 5) en tant que dispositif cible de restauration (3, 4, 5) ; et

le système de transmission est agencé de manière à transmettre au dispositif cible de restauration (3, 4, 5) les données de sauvegarde du dispositif cible de restauration (3, 4, 5) afin de permettre à un utilisateur de démarrer une restauration des configurations du dispositif cible de restauration (3, 4, 5) à un état précédent.

19. Dispositif terminal selon la revendication 18, comprenant en outre un système de restauration qui restaure des configurations d'un dispositif cible de restauration de la pluralité de dispositifs cibles à un état précédent, en transmettant certaines données de configuration actuelles de la pluralité d'éléments de données de configuration actuelles stockées par l'étape consistant à stocker au dispositif cible de restauration (3, 4, 5), dans lequel la donnée de configuration actuelle est une donnée obtenue à partir du dispositif cible de restauration (3, 4, 5) lors de l'étape d'obtention.

20. Système de transmission de données de configuration à une pluralité de dispositifs cibles, comprenant un dispositif terminal selon la revendication 18 ou 19.

FIG. 1

FIG. 2

EP 1 669 871 B1

FIG. 3

13

| Item | Current Value | Update Value |
|---|---|---|
| Capabilities | 34 Pages Per Minute (mono) | |
| Serial Number | 0 | |
| Tray Status | Not Empty | |
| ROM Version | 1.04 | |
| Location | Net G | |
| Contact | | |
| Maintenance Info. | OK | |
| Counters | Page Count 34933 (pages) | |

**FIG. 4**

EP 1 669 871 B1

FIG. 5

15

| | | | Configre Printer | Notification |

**Configure NODE0023**  [?] [X]

| General | Control | Services | TCP/IP | POP3/SMTP | |

Node Name: `NODE0023`

Printer Type: ` `

Node S/N: `not applicable`

Mac Address: `xx : xx : xx : xx : xx : xx`

Firmware ID: `Firmware Ver.1.`

Boot Revision: `not applicable`

Location: `Location 1`

Contact: `aaa @ bbb.cc.d`

17 → `Send to Multiple Printer`

18 → `Recover Setting`

[ Cancel ]  [ Help ]

[ OK ]  [ Cancel ]  [ Help ]

# FIG. 6

# FIG. 7

```
                    ┌──────────────┐
                    │    START     │
                    └──────┬───────┘
                           │
        ┌──────────────────▼─────────────────┐
        │  SEND SETTINGS TO PRINTER(S)       │  S101
        │       DIALOG PROCESS               │
        └──────────────────┬─────────────────┘
    S103                   │
              ◇────────────▼─────────────◇  NO
              ◇      OK BUTTON?           ◇──────┐
              ◇──────────────────────────◇      │
                           │ YES                 │
        ┌──────────────────▼─────────────────┐   │
        │  TRANSMISSION CONFIRMATION         │   │ S105
        │       DIALOG PROCESS               │   │
        └──────────────────┬─────────────────┘   │
                           │           S107       │
        NO    ◇────────────▼─────────────◇        │
    ┌─────────◇     SEND BUTTON?          ◇        │
    │         ◇──────────────────────────◇        │
    │                      │ YES                   │
    │   ┌──────────────────▼─────────────────┐     │
    │   │   SETTING DATA PACKAGE             │     │ S109
    │   │   TRANSMISSION  PROCESS            │     │
    │   └──────────────────┬─────────────────┘     │
    │                      │                       │
    │              ┌───────▼───────┐◄──────────────┘
    │              │     END       │
    │              └───────────────┘
```

# FIG. 8

START

DISPLAY SEND SETTINGS TO PRINTER(S) DIALOG BOX — S201

DISPLAY DEVICE LIST — S203

ACCEPT BUTTON/KEY INPUTS ON THE DIALOG — S205

S207
ADDITION DEVICE IS INPUTTED? — YES → INPUTTING PROCESS OF ADDITION DEVICE — S209

NO  S211
ADD BUTTON? — YES → ADD DESIGNATED DEVICE TO DEVICE LIST — S213

NO  S215
REMOVE BUTTON? — YES → REMOVE DESIGNATED DEVICE FROM DEVICE LIST — S217

NO  S219
SEARCH BUTTON? — YES → SEARCH FOR DEVICE TO UPDATE DEVICE LIST — S221

NO  S223
TRANSMISSION TYPE IS CHANGED? — YES → CHANGE TRANSMISSION TYPE AND DISPLAY CHANGED TRANSMISSION TYPE — S225

NO

SEARCH FOR DEVICE AND UPDATE DEVICE LIST — S227

S229
OK BUTTON? — YES

NO  S231
CANCEL BUTTON? — YES → WIPE OUT SEND SETTINGS TO PRINTER(S) DIALOG BOX — S233

NO

END

21

**Send Settings to Printer**                                        ✖

Target Primter
23 — ⊙ Current Printer
      ○ Multiple Printers          | Send all Current Values        ▼ | — 25

Target Node
| Address | Name | Location 1 |        Search — 29
27 —                                   Remove — 31

◀                                ▶

|                                    | Add — 35

[ OK ]                              [ Cancel ]

37          33          39

# FIG. 9

21

**Send Settings to Printer**                                        ✖

Target Primter
23 — ○ Current Printer
      ⊙ Multiple Printers          | Send all Current Values        ▼ | — 25

Target Node
| Address | Name | Location 1 |        Search — 29
| 192.168.xxx.xxx | NodeXXXXXX | Location 1 |
27 — | 192.168.xxx.xxx | NodeXXXXXX | Location 2 |   Remove — 31
| 192.168.xxx.xxx | NodeXXXXXX | |
| 192.168.xxx.xxx | NodeXXXXXX | |
| 192.168.xxx.xxx | NodeXXXXXX | |
| 192.168.xxx.xxx | NodeXXXXXX | |

◀                                ▶

|                                    | Add — 35

[ OK ]                              [ Cancel ]

37          33          39

# FIG.10

START

OBTAIN NODE NAME AND
LOCATION FROM DEVICE
DESIGNATED IN ADDITION
DEVICE INPUT TEXT BOX
S301

S303

INFORMATION IS
SUCCESSFULLY
OBTAINED?

NO

S307

DISPLAY COMMUNICATION
ERROR MESSAGE BOX AND
WAIT FOR INPUT OF
RETRY/CANCEL BUTTON

YES

ADD DEVICE TO DEVICE LIST
S305

S309

JUDGE TYPE OF
INPUTTED BUTTON

RETRY

CANCEL

END

FIG.11

FIG.12

# FIG.13

```
              ┌──────────────┐
              │    START     │
              └──────┬───────┘
         ┌───────────────────────┐
         │ DISPLAY TRANSMISSION  │  S501
         │ CONFIRMATION DIALOG BOX│
         └───────────┬───────────┘
         ┌───────────────────────┐
         │    DEVICE SETTING     │  S503
         │ ACQUISITION PROCESS   │
         └───────────┬───────────┘
         ┌───────────────────────┐
         │  DISPLAY DEVICE LIST  │  S505
         └───────────┬───────────┘
         ┌───────────────────────┐
         │ ACCEPT INPUT OF BUTTON│  S507
         └───────────┬───────────┘
```

S509 — REMOVE BUTTON? — YES → S511 REMOVE DEVICE FROM DEVICE LIST

NO

S513 — REFRESH BUTTON? — YES

NO

S515 — SEARCH BUTTON? — YES → S517 SEARCH FOR DEVICE AND UPDATE DEVICE LIST

NO

S519 — SEND BUTTON? — YES → S521 STORE DEVICE LIST AND STATUS IN LOG FILE

NO

S527 — CANCEL BUTTON? — YES → WIPE OUT TRANSMISSION CONFIRMATION DIALOG BOX  S523

NO

END

S529 — DEVICE IS DOUBLE CLICKED? — NO / YES

S531 ADVANCED SETTING CHANGE WINDOW PROCESS

41

Settings to Printer                                              ⚒

| Address | Name | Status |
|---------|------|--------|
| 192.168.xxx.xxx | NodeXXXXXX | Identical |
| 192.168.xxx.xxx | NodeXXXXXX | Change |
| 192.168.xxx.xxx | NodeXXXXXX | Change |
| 192.168.xxx.xxx | NodeXXXXXX | Connection Error |
| 192.168.xxx.xxx | NodeXXXXXX | Identical |
| 192.168.xxx.xxx | NodeXXXXXX | Change |

Search — 45

Refresh — 47

— 49

43

Cancel                                                            Send

51                                                                53

# FIG.14

START

INITIALIZE VARIABLE
INDICATING CURRENTLY
TARGETED DEVICE — S601

S603

ALL OF THE DEVICES
HAVE BEEN PROCESSED
?

YES

END

NO

OBTAIN SETTING DATA FROM
TARGETED DEVICE — S605

S607

SETTING DATA
ARE SUCCESSFULLY
OBTAINED
?

NO

YES S609

REGISTER OBTAINED
SETTING DATA IN DEVICE
LIST

S611

WRITE ERROR INFORMATION
IN DEVICE LIST

UPDATE VARIABLE
INDICATING CURRENTLY
TARGETED DEVICE — S613

# FIG.15

41

## Settings to Printer ☒

| Address | Name | Status | | |
|---|---|---|---|---|
| 192.168.xxx.xxx | NodeXXXXXX | Identical | | Search |
| 192.168.xxx.xxx | NodeXXXXXX | Change | | |
| 192.168.xxx.xxx | NodeXXXXXX | Change | | Refresh |
| 192.168.xxx.xxx | NodeXXXXXX | Connection Error | | |
| 192.168.xxx.xxx | NodeXXXXXX | Identical | | Remove |
| 192.168.xxx.xxx | NodeXXXXXX | Change | | |

45

47

49

43

Cancel

Send

51

53

# FIG.16

START

DISPLAY ADVANCED SETTING CHANGE WINDOW — S701

ACCEPT MOUSE/KEY INPUT — S703

S705

DEVICE IS DOUBLE CLICKED?   YES

NO

SETTING CHANGE PROCESS — S707

S713

END COMMAND?

NO

SETTING VALUE HAS BEEN CHANGED?   NO — S709

YES

S715

WIPE OUT THE ADVANCED SETTING CHANGE WINDOW

APPLY CHANGED SETTING VALUE TO THE ADVANCED SETTING CHANGE WINDOW — S711

YES

END

FIG.17

45

55

| Status [Change] — NodeXXXXXX | | | ✖ |
|---|---|---|---|

| Item | Current Value | Update Value | ▲ |
|---|---|---|---|
| Emulation | AUTO | | |
| Feeder | Auto | | |
| Media Type | Plain paper | | |
| Resolution | 600 | | |
| Page Protection | Auto | | |
| Copy | 1 | | |
| Continue | Manual | Auto | |
| Toner Save | OFF | ON | |
| Power Save | 1 | | |
| Destination | Standard Output Tray | | |
| Toner Low | Continue | | |
| Reprint | ON | | |
| Lower LCD | None | | |
| Auto Online | ON | | |
| Button Repeat | 0.1 sec | | |
| Message Scroll | 1 | | |
| Error Buzzer | OFF | | |
| Orientation | Portrait | | |
| Paper Size | A4 210 X 297 mm | Letter B 1/2 X 11 in | |
| Left Margin | 0 | | |
| Right Margin | 78 | 80 | |
| Top Margin | 0.5 | | |
| Bottom Margin | 0.5 | | |
| Lines/Page | 64 | 60 | ▼ |

# FIG.18

57

| Status [Change] — NodeXXXXXX | | ⊠ |
|---|---|---|

| Item | Current Value | Update Value |
|---|---|---|
| TCP/IP | ON | |
| OLC | ON | OFF |
| NetBIOS/IP | ON | OFF |
| POP3/SMTP | ON | OFF |
| IPP | ON | OFF |
| FTP | ON | |
| SSDP | OFF | |
| mDNS | ON | |
| Network Mode | Automatic | |
| TCP/IP Timeout | 60 minutes | 5 minutes |
| Boot Tries | 3 | |
| DNS Server Method | Static | |
| DNS Server Address1 | 10.134.12.34 | |
| DNS Server Address2 | 10.134.12.35 | |
| Timeout of Gateway | 5 seconds | |
| SMTP Server Address | "smtp.example.com" | "smtp2.example.com " |
| POP3 Server Address | "pop.example.com " | |
| POP3 Polling Frequency | 300 seconds | |
| POP3 Timeout | 120 minutes | |
| NetBIOS Domain Name | "WORKGROUP " | |
| WINS Server Address1 | 10.134.12.36 | |
| WINS Server Address2 | 10.134.12.37 | |
| WINS Server Config | Static | |
| Notification Admin 1 | Unconfigured | |
| Resolution Message 1 | ON | |
| Cover Open 1 | Never | |

## FIG.19

# FIG.20

START

DISPLAY SETTING CHANGE DIALOG BOX — S801

ACCEPT MOUSE/KEY INPUT — S803

S805
USER OPERATION FOR CHANGING SETTING VALUE?

YES → S807
APPLY CHANGED SETTING TO THE SETTING CHANGE DIALOG BOX

NO

S809
OK BUTTON?

YES → S811
APPLY CHANGED SETTING TO ENTRY OF TARGET DEVICE IN DEVICE LIST

NO

S815
CANCEL BUTTON?

YES → S813
WIPE OUT THE SETTING CHANGE DIALOG BOX

NO

END

# FIG.21

61

Modify Settings ✕

Paper Size

Letter 8 1/2 × 11 in
Legal 8 1/2 × 14 in
A4 210 × 297 mm
Executive 7 1/2 × 10 in
Com – 10 4 1/8 × 9 1/2 in
Monarch 3 7/8 × 7 1/2 in

63

OK — 65          Cancel — 67

48

```
                    ( START )
                         │
        ┌────────────────────────────────┐
        │ DISPLAY TRANSMISSION           │ S901
        │ PROGRESS DIALOG BOX            │
        └────────────────────────────────┘
                         │
        ┌────────────────────────────────┐
        │ INITIALIZE VARIABLE INDICATING │ S903
        │ CURRENTLY TARGETED DEVICE      │
        └────────────────────────────────┘
                         │
                      S905
              ◇ ALL OF THE DEVICES ◇ ──YES──────────────────────────┐ S931
                HAVE BEEN PROCESSED?                                 │
                         │ NO    S907           ┌──────────────────────────────┐
              ◇ ADVANCED SETTING ◇ ──YES──┐     │ WIPE OUT TRANSMISSION        │
                HAS BEEN CONDUCTED?        │     │ PROGRESS DIALOG BOX          │
                         │ NO              │     └──────────────────────────────┘
                    S909         S911      │     ┌──────────────────────────────┐
   ┌──────────────────────┐ ┌──────────────────────┐ │ DISPLAY TRANSMISSION      │
   │ SETTING VALUES       │ │ UPDATE SETTING       │ │ RESULT DIALOG BOX AND     │
   │ COMMON TO ALL OF THE │ │ VALUES SET IN THE    │ │ WAIT FOR OK BUTTON INPUT  │
   │ DEVICES ARE          │ │ ADVANCED SETTING ARE │ └──────────────────────────────┘
   │ TRANSMITTED TO       │ │ TRANSMITTED TO       │        S933
   │ TARGET DEVICE        │ │ TARGET DEVICE        │
   └──────────────────────┘ └──────────────────────┘
         S913            │
              ◇ REPRESENTATIVE ◇ ──NO──┐
                 DEVICE?                │
                   │ YES                │
   ┌──────────────────────────────┐    │
   │ CHANGED SETTING VALUES OF     │    │
   │ ITEMS TO BE APPLIED ONLY TO   │ S915
   │ REPRESENTATIVE DEVICE ARE     │    │
   │ TRANSMITTED TO                │    │
   │ REPRESENTATIVE DEVICE         │    │
   └──────────────────────────────┘    │
      S917               │
              ◇ CANCEL BUTTON? ◇ ──YES──────────────────────────┐ S935
                   │ NO                                           │
      S919                                             ┌──────────────────────────────┐
              ◇ TRANSMISSION IS ◇ ──NO──┐              │ WIPE OUT THE TRANSMISSION    │
                SUCCESSFULLY             │              │ PROGRESS DIALOG BOX          │
                FINISHED?                │              └──────────────────────────────┘
                   │ YES    S921    S923 │                         │
   ┌──────────────────────┐ ┌──────────────────────┐           ( END )
   │ SUCCESS INFORMATION  │ │ FAILURE INFORMATION  │
   │ IS WRITTEN IN        │ │ IS WRITTEN IN        │
   │ DEVICE LIST          │ │ DEVICE LIST          │
   └──────────────────────┘ └──────────────────────┘
                   │
   ┌────────────────────────────────┐
   │ UPDATE VARIABLE INDICATING     │ S925
   │ CURRENTLY TARGETED DEVICE      │
   └────────────────────────────────┘
                   │
   ┌────────────────────────────────┐
   │ UPDATE PROGRESS BAR IN THE     │ S927
   │ TRANSMISSION PROGRESS          │
   │ DIALOG BOX                     │
   └────────────────────────────────┘
```

# FIG.22

FIG.23A

FIG.23B

FIG.24

START

DISPLAY NIC SETTING
DIALOG BOX — S1001

ACCEPT MOUSE/KEY INPUT — S1003

S1005
OK BUTTON? — YES

NO

S1015
UNAPPLIED SETTING
VALUES EXIST? — NO

YES — S1017

TRANSMIT UNAPPLIED
SETTING VALVES TO
REPRESENTATIVE DEVICE

S1007
CANCEL BUTTON? — YES

WIPE OUT THE NIC SETTING
DIALOG BOX — S1019

NO

END

S1009
SEND BUTTON? — YES

NO — S1013

S1011

PROCESS FOR ANOTHER
BUTTON OR CHANGE OF
SETTING VALUE

SECOND DATA SETTING
TRANSMISSION PROCESS

FIG.25

51

FIG.26

**FIG.27**

EP 1 669 871 B1

START

SEARCH FOR
SETTING HISTORY FILE
OF TARGET DEVICE — S1201

READ FILE — S1203

TRANSMIT
DATA READ FROM FILE
TO TARGET DEVICE — S1205

DELETE USED
SETTING HISTORY FILE — S1207

END

# FIG.28

```
                    ┌─────────────┐
                    │    START    │
                    └─────────────┘
                           │
              ┌────────────────────────┐
              │         READ           │  S1301
              │  CURRENT SETTING DATA  │
              └────────────────────────┘
                           │
              ┌────────────────────────┐
              │      SEARCH FOR        │  S1303
              │  SETTING HISTORY FILE  │
              │    OF TARGET DEVICE    │
              └────────────────────────┘
                           │
                        S1305
                      ╱─────────╲
                     ╱  SETTING  ╲    FALSE
                    ╱ HISTORY FILE ╲──────────┐
                    ╲   EXISTS?    ╱          │
                     ╲────────────╱           │
                         │ TRUE              │
              ┌────────────────────────┐      │
              │    RENAME / DELETE     │ S1307 │
              │         FILE           │      │
              └────────────────────────┘      │
                           │◄─────────────────┘
              ┌────────────────────────┐
              │        CREATE          │  S1309
              │  SETTING HISTORY FILE  │
              └────────────────────────┘
                           │
              ┌────────────────────────┐
              │        STORE           │
              │  CURRENT SETTING DATA  │  S1311
              │ TO SETTING HISTORY FILE│
              └────────────────────────┘
                           │
              ┌────────────────────────┐
              │       TRANSMIT         │  S1313
              │   NEW SETTING DATA     │
              └────────────────────────┘
                           │
                    ┌─────────────┐
                    │     END     │
                    └─────────────┘
```

# FIG.29

```
            ┌─────────────┐
            │    START    │
            └──────┬──────┘
                   │
      ┌────────────────────────┐
      │     SEARCH FOR         │
      │ SETTING HISTORY FILE   │  S1401
      │   OF TARGET DEVICE     │
      └────────────┬───────────┘
                   │
      ┌────────────────────────┐
      │      READ FILE         │  S1403
      └────────────┬───────────┘
                   │
      ┌────────────────────────┐
      │      TRANSMIT          │
      │ DATA READ FROM FILE    │  S1405
      │   TO TARGET DEVICE     │
      └────────────┬───────────┘
                   │
      ┌────────────────────────┐
      │    DELETE USED         │  S1407
      │ SETTING HISTORY FILE   │
      └────────────┬───────────┘
                   │
      ┌────────────────────────┐
      │   RENAME OTHER         │  S1409
      │ SETTING HISTORY FILE   │
      └────────────┬───────────┘
                   │
            ┌──────┴──────┐
            │     END     │
            └─────────────┘
```

# FIG.30

56

START

SEARCH FOR
SETTING HISTORY FILE
OF TARGET DEVICE — S1501

READ FILE — S1503

DISPLAY SETTING ITEMS
AND VALUES
TO BE RECOVERED — S1505

S1507

RECOVER? — FALSE

TRUE

TRANSMIT
DATA TO TARGET DEVICE — S1509

DELETE USED
SETTING HISTORY FILE — S1511

RENAME OTHER
SETTING HISTORY FILE — S1513

END

FIG.31

85

**Recover Setting** ✖

| Item | Current Value | Recover Value | |
|------|---------------|---------------|---|
| Continue | Manual | Auto | |
| Toner Save | OFF | ON | |
| Paper Size | A4 210×297mm | Letter8 1/2×11... | |
| Right Margin | 78 | 80 | |
| Lines/Pane | 64 | 60 | |

Send  Cancel

86  87  88

# FIG.32

START

SEARCH FOR
SETTING HISTORY FILE
OF TARGET DEVICE ── S1601

READ FILE ── S1603

DISPLAY SETTING ITEMS
AND VALUES
TO BE RECOVERED ── S1605

SELECT ITEMS
TO BE RECOVERED ── S1607

S1609

RECOVER? ── FALSE

TRUE

TRANSMIT
DATA TO TARGET DEVICE ── S1611

DELETE USED
SETTING HISTORY FILE ── S1613

RENAME OTHER
SETTING HISTORY FILE ── S1615

END

FIG.33

85a

| Item | Current Value | Recover Value | Recover ? Yes/NO |
|------|---------------|---------------|------------------|
| Continue | Manual | Auto | Yes |
| Toner Save | OFF | ON | NO |
| Paper Size | A4 210×297mm | Letter8 1/2×11 | Yes |
| Right Margin | 78 | 80 | Yes |
| Lines/Pane | 64 | 60 | Yes |

Recover ? Yes/NO — 89

Recover Setting

Send — 87

Cancel — 88

86

# FIG.34

START

READ
CURRENT SETTING DATA $\quad$ S1701

COMPARE NEW
SETTING DATA WITH
CURRENT SETTING DATA $\quad$ S1703

SEARCH FOR
SETTING HISTORY FILE OF $\quad$ S1705
TARGET DEVICE

S1707

SETTING
HISTORY FILE $\quad$ FALSE
EXISTS?

TRUE

RENAME / DELETE
FILE $\quad$ S1709

CREATE
SETTING HISTORY FILE $\quad$ S1711

STORE SETTING VALUES
TO BE CHANGED TO $\quad$ S1713
SETTING HISTORY FILE

TRANSMIT
NEW SETTING DATA $\quad$ S1715

END

# FIG.35

START

SEARCH FOR SETTING HISTORY
FILE OF TARGET DEVICE — S1801

READ DATE(TARGET DATE)FROM
SETTING HISTORY FILE — S1803

ALL OF SETTING HISTORY FILES — S1805

READ DATE FROM FILES — S1807

S1809

DATE READ
FROM FILE IS EQUAL TO
TARGET DATE ? — FALSE

TRUE

ADD FILE TO LIST — S1811

S1813

LIST IS NOT EMPTY ? — FALSE

TRUE

DISPLAY LIST — S1815

SELECT SETTING HISTORY FILES
TO BE RECOVERED — S1817

DEVICES TO BE RESTORED — S1819

READ SETTING DATA FROM
SETTING HISTORY FILE — S1821

TRANSMIT SETTING DATA — S1823

DELETE PROCESSED
SETTING HISTORY FILE — S1825

END

# FIG.36

91

## Other Devices..  ☒

There are some devices that were sent same setting
Recover these ?

Target

Remove — 93

| Name | Address | Printer Type | Location |
|------|---------|--------------|----------|
| NODE003 | 192.168.0.3 | PrinterXL02 | 1F |
| NODE023 | 192.168.0.23 | PrinterXL03 | 1F - west |
| NODE024 | 192.168.0.24 | PrinterXL02 | 2F |
| NODE027 | 192.168.0.27 | PrinterXL03 | 4F - A |

92

Recover | Cancel

94    95

# FIG.37

START

INPUT TARGET TIME PERIOD — S1901

ALL OF SETTING HISTORY FILES — S1903

READ DATE FROM FILE — S1905

S1907

DATE READ
FROM FILE IS WITHIN TARGET
TIME PERIOD ?  — FALSE

TRUE

ADD FILE TO LIST — S1909

S1911

LIST IS NOT EMPTY ? — FALSE

TRUE

DISPLAY LIST — S1913

SELECT SETTING HISTORY FILES
TO BE RECOVERED — S1915

SETTING HISTORY FILES
TO BE RECOVERED — S1917

READ SETTING DATA FROM
SETTING HISTORY FILE — S1919

TRANSMIT SETTING DATA — S1921

DELETE PROCESSED
SETTING HISTORY FILE — S1923

END

# FIG.38

**Search Setting History** ⊠

From:

Month: [ ▾ ] Day: [ ▾ ] Year: [ ▾ ]

To:

Month: [ ▾ ] Day: [ ▾ ] Year: [ ▾ ]

[ OK ] [ Cancel ]

201

203

205  207

# FIG.39

211

**Search Result** ⊠

Target

[ Remove ] ← 215

| Date | Name | Address | Printer Type | Location | |
|------|------|---------|--------------|----------|---|
| 3/23/04 16:23 | NODE003 | 192.168.0.3 | PrinterXL02 | 1F | ▲ |
| 3/23/04 16:23 | NODE023 | 192.168.0.23 | PrinterXL03 | 1F – west | |
| 3/23/04 16:09 | NODE003 | 192.168.0.3 | PrinterXL02 | 1F | |
| 3/23/04 16:09 | NODE023 | 192.168.0.23 | PrinterXL03 | 1F – west | |
| 1/21/04 12:09 | NODE027 | 192.168.0.27 | PrinterXL03 | 4F – A | ▼ |

213

[ ◀ ] [ ▶ ]

[ Recover ] [ Cancel ]

217  219

# FIG.40

START

INPUT TARGET ITEMS —— S2001

ALL OF SETTING HISTORY FILES —— S2003

READ SETTING ITEMS —— S2005

S2007

SETTING ITEMS INCLUDE TARGET ITEMS ? —— FALSE

TRUE

ADD FILE TO LIST —— S2009

S2011

LIST IS NOT EMPTY? —— FALSE

TRUE

DISPLAY LIST —— S2013

SELECT SETTING HISTORY FILES TO BE RECOVERED —— S2015

SETTING HISTORY FILES TO BE RECOVERED —— S2017

READ SETTING VALVES OF TARGET ITEMS —— S2019

TRANSMIT SETTING VALUVES OF TARGET ITEMS —— S2021

DELETE PROCESSED SETTING HISTORY FILE —— S2023

END

# FIG.41

START

INITIALIZE VARIABLE
INDICATING CURRENTLY
TARGETED DEVICE — S601

S603

ALL OF THE DEVICES
HAVE BEEN PROCESSED
? — YES → END

NO

S604

REPRESENTATIVE
DEVICE? — YES → S615

DISABLE ENTRY OF
CURRENTLY TARGETED
DEVICE

NO

OBTAIN SETTING DATA FROM
TARGETED DEVICE — S605

S607

SETTING DATA IS
SUCCESSFULLY OBTAINED
? — NO

YES — S609

REGISTER OBTAINED
SETTING DATA IN DEVICE
LIST

S611

WRITE ERROR INFORMATION
IN DEVICE LIST

UPDATE VARIABLE
INDICATING CURRENTLY
TARGETED DEVICE — S613

# FIG.42

START

DISPLAY TRANSMISSION
PROGRESS DIALOG BOX — S901

INITIALIZE VARIABLE INDICATING
CURRENTLY TARGETED DEVICE — S903

S905
ALL OF THE DEVICES
HAVE BEEN PROCESSED? — YES → 

WIPE OUT TRANSMISSION
PROGRESS DIALOG BOX — S931

DISPLAY TRANSMISSION
RESULT DIALOG BOX AND
WAIT FOR OK BUTTON INPUT — S933

NO

S906
ENTRY IS INVALID? — YES

NO S907
ADVANCED SETTING
HAS BEEN CONDUCTED? — YES

NO

S909
SETTING VALUES COMMON TO ALL
OF THE DEVICES ARE
TRANSMITTED TO TARGET DEVICE

S911
UPDATE SETTING VALUES SET IN
THE ADVANCED SETTING ARE
TRANSMITTED TO TARGET DEVICE

S917
CANCEL BUTTON? — YES →

S935
WIPE OUT THE TRANSMISSION
PROGRESS DIALOG BOX

END

NO

S919
TRANSMISSION IS
SUCCESSFULLY
FINISHED? — NO

YES S921
SUCCESS INFORMATION
IS WRITTEN IN DEVICE LIST

S923
FAILURE INFORMATION
IS WRITTEN IN DEVICE LIST

UPDATE VARIABLE INDICATING
CURRENTLY TARGETED DEVICE — S925

UPDATE PROGRESS BAR IN THE
TRANSMISSION PROGRESS
DIALOG BOX — S927

FIG.43

**EP 1 669 871 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6559964 B
- EP 0598504 A
- US 6115798 A
- US 5361138 A